(19) Europäisches Patentamt
European Patent Office
Office européen des brevets

(11) Veröffentlichungsnummer: **0 172 450**
**B1**

(12) # EUROPÄISCHE PATENTSCHRIFT

(45) Veröffentlichungstag der Patentschrift: **24.10.90**

(51) Int. Cl.5: **C 08 F 246/00,** C 09 K 19/38

(21) Anmeldenummer: **85109486.2**

(22) Anmeldetag: **27.07.85**

(54) **Flüssigkristalline Phasen aufweisende Polymerzusammensetzungen.**

(30) Priorität: **18.08.84 DE 3430482**

(43) Veröffentlichungstag der Anmeldung: **26.02.86 Patentblatt 86/09**

(45) Bekanntmachung des Hinweises auf die Patenterteilung: **24.10.90 Patentblatt 90/43**

(84) Benannte Vertragsstaaten: **CH DE FR GB IT LI NL SE**

(56) Entgegenhaltungen:
**EP-A-0 134 576**
**EP-A-0 140 133**
**DE-A-2 944 591**

**DIE MAKROMOLEKULAR CHEMIE, Band 179, nr. 1, Januar 1978, Basel H. FINKELMANN et al. "Model Considerations and Examples of Enantiotropic Liquid Crystalline Polymers", Seiten 273-276**

(73) Patentinhaber: **MERCK PATENT GESELLSCHAFT MIT BESCHRÄNKTER HAFTUNG**
**Frankfurter Strasse 250 Postfach 4119**
**D-6100 Darmstadt (DE)**

(72) Erfinder: **Praefcke, Klaus, Prof. Dr.**
**Kranzallee 62**
**D-1000 Berlin 19 (DE)**
Erfinder: **Kohne, Bernd, Dr.**
**Grussdorfstrasse 11**
**D-1000 Berlin 27 (DE)**
Erfinder: **Poetsch, Eike, Dr.**
**Am Buchwald 4**
**D-6109 Mühltal 6 (DE)**
Erfinder: **Herz, Claus Peter, Dr.**
**Berghalde 20**
**D-6900 Heidelberg 1 (DE)**

(56) References cited:
**MOLECULAR CRYSTALS AND LIQUID CRYSTALS, MCLCAS, Band 63, nr. 1-4, 1981, London-New York-Paris S. CHANDRASEKHAR "Liquid Crystals of Disc-like Molecules", Seiten 171-180**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

EP 0 172 450 B1

**Beschreibung für die benannten Vertragsstaaten: CH DE FR GB IT LI**

Die Erfindung betrifft flüssigkristalline Phasen aufweisende Polymerzusammensetzungen, die gegebenenfalls mit Hilfe eines Spacers chemisch gebundene mesogene Gruppen der Formel Ia und/oder IB enthalten:

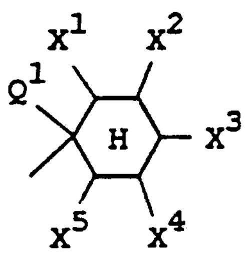

Ia

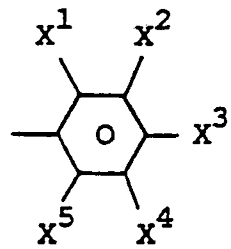

Ib

worin

$Q^1$ H, Alkyl oder Alkoxy mit 1—5 C-Atomen, F, Cl, Br oder CN,

$X^1$ bis $X^5$ jeweils unabhängig voneinander H oder eine Alkylgruppe mit bis zu 15 C-Atomen bedeuten, worin auch eine oder zwei nicht benachbarte $CH_2$-Gruppen durch eine Gruppierung aus der Gruppe —O—, —S—, —O—CO—O—, —O—CO—NHR—, —CO—, —CO—O—, —CO—S—, —S—CO—, —SO— und —$SO_2$— ersetzt sein können,

wobei mindestens zwei der Substituenten $X^1$ bis $X^5$ von H verschieden sind.

Es sind bereits eine ganze Reihe von flüssigkristallinen Polymeren bekannt, beispielsweise mit 4'-Cyanbiphenyl-4-yl als mesogene Gruppe modifizierte Polyacryl- und Polymethacrylsäureester. Nematische Phasen solcher Polymerzusammensetzungen liegen meist bei Temperaturen oberhalb 100°. Durch Polymerisation von nematischen oder cholesterischen Monomeren erhält man oft höher geordnete hochviskose smektische Polymere. Polymerzusammensetzungen mit rod-like mesogenen Seitengruppen führen überdies oft zu kristallinen Polymeren ohne mesomorphe Eigenschaften. Polymere, die als mesogene Gruppen diskotische Phasen erzeugende Gruppen enthalten, sind in EP—A—140 133 beschrieben. Diese Polymere enthalten jedoch ausschließlich mesogene Gruppen mit aromatischem Charakter.

Aufgabe der vorliegenden Erfindung war es nun, flüssigkristalline Phasen aufweisende Polymerzusammensetzungen zu finden, die die beschriebenen Nachteile nicht oder nur in geringerem Maße aufweisen.

Es wurde nun gefunden, daß Polymerzusammensetzungen, die chemisch gebundene mesogene Gruppen der Formel Ia und/oder Ib enthalten, überraschend breite Mesophasenbereiche, eine in weiten Grenzen variierbare Doppelbrechung und eine positive wie negative diamagnetische Anisotropie aufweisen. Sie sind außerdem leicht zu Körpern beliebiger Form mit anisotropen Eigenschaften verarbeitbar und weisen eine hohe chemische Stabilität auf.

Gegenstand der Erfindung sind flüssigkristalline Phasen aufweisende Polymerzusammensetzungen, die — gegebenenfalls mit Hilfe eines Spacers chemisch gebundene— mesogene Gruppen enthalten, dadurch gekennzeichnet, daß diese mesogenen Gruppen der Formel Ia und/oder Ib entsprechen:

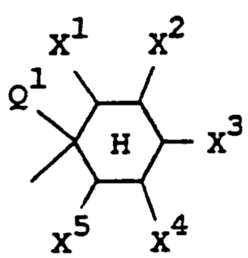

Ia

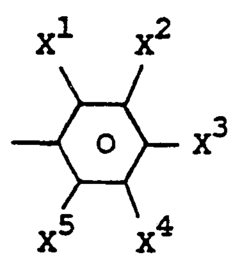

Ib

worin

$Q^1$ H, Alkyl oder Alkoxy mit 1—5 C-Atomen, F, Cl, Br oder CN,

$X^1$ bis $X^5$ jeweils unabhängig voneinander H oder eine Alkylgruppe mit bis zu 15 C-Atomen bedeuten, worin auch eine oder zwei nicht benachbarte $CH_2$-Gruppen durch eine Gruppierung aus der Gruppe —O—, —S—, —O—CO—O—, —O—CO—NHR—, —CO—, —CO—O—, —CO—S—, —S—CO—, —SO— und —$SO_2$— ersetzt sein können,

wobei mindestens zwei der Substituenten $X^1$ bis $X^5$ von H verschieden sind.

In den genannten Resten der Formel Ia ist $Q^1$ vorzugsweise H oder unverzweigtes Alkyl, vorzugsweise mit 1 bis 4 C-Atomen, insbesondere Methyl oder Ethyl sowie besonders bevorzugt CN.

In den Resten $X^1$ bis $X^5$ ist vorzugsweise jeweils eine $CH_2$-Gruppe durch eine funktionelle Gruppe ersetzt, insbesondere diejenige, die die Bindung zum zentralen Carbocyclus bildet.

$X^1$ bis $X^5$ ist bevorzugt —O—, —S—, —CO—, —CO—O—, —SO—, —$SO_2$—, insbesondere —O—, —S— und —$SO_2$.

Vorzugsweise sind mindestens 3 der Substituenten $X^1$ bis $X^5$ von H verschieden, insbesondere $X^1$, $X^3$ und $X^5$. Weiterhin bevorzugt sind mesogene Gruppen der Formel Ia und/oder Ib, in denen alle Substituenten $X^1$ bis $X^5$ von H verschieden sind, insbesondere $X^1$ bis $X^5$ gleich sind.

$X^1$ bis $X^5$ bedeuten demnach bevorzugt: Methoxy, Ethoxy, Propoxy, 1-Methylethoxy, Butoxy, 1-Methylpropoxy, 2-Methylpropoxy, 1,1-Dimethylethoxy, Pentoxy, Hexoxy, Heptoxy, Octoxy, Nonoxy, Decoxy, Undecoxy, Dodecoxy, Tridecoxy, Tetradecoxy; Methylthio, Ethylthio, Propylthio, 1-Methylethylthio, Butylthio, 1-Methylpropylthio, 2-Methyl-propylthio, 1,1-Dimethylthylthio, Pentylthio, Hexylthio, Heptylthio, Octylthio, Nonylthio, Decylthio, Undecylthio, Dodecylthio, Tridecylthio, Tetradecylthio; Acetyl, Propionyl, Butyryl, 2-Methylpropionyl, 3-Methylpropionyl, Pentanoyl, Pivaloyl, Hexanoyl, Heptanoyl, Octanoyl, Nonanoyl, Decanoyl, Undecanoyl, Dodecanoyl, Tridecanoyl, Tetradecanoyl; Methoxycarbonyl, Ethoxycarbonyl, Propoxycarbonyl, 1-Methylethoxycarbonyl, Butoxycarbonyl, 1-Methylpropoxycarbonyl, 1,1-Dimethylethoxycarbonyl, Pentoxycarbonyl, Hexoxycarbonyl, Heptoxycarbonyl, Octoxycarbonyl, Nonoxycarbonyl, Decoxycarbonyl, Undecoxycarbonyl, Dodecoxycarbonyl, Tridecoxycarbonyl, Tetradecoxycarbonyl; Methylsulfinyl, Ethylsulfinyl, Propylsulfinyl, 1-Methylethylsulfinyl, Butylsulfinyl, 1-Methylpropylsulfinyl, 2-Methylpropylsulfinyl, 1,1-Dimethylethylsulfinyl, Pentylsulfinyl, Hexylsulfinyl, Heptylsulfinyl, Octylsulfinyl, Nonylsulfinyl, Decylsulfinyl, Undecylsulfinyl, Dodecylsulfinyl, Tridecylsulfinyl, Tetradecylsulfinyl; Methylsulfonyl, Ethylsulfonyl, Propylsulfonyl, 1-Methylethylsulfonyl, Butylsulfonyl, 1-Methylpropylsulfonyl, 2-Methylpropylsulfonyl, 1,1-Dimethylethylsulfonyl, Pentylsulfonyl, Hexylsulfonyl, Heptylsulfonyl, Octylsulfonyl, Nonylsulfonyl, Decylsulfonyl, Undecylsulfonyl, Dodecylsulfonyl, Tridecylsulfonyl, Tetradecylsulfonyl.

Die den mesogenen Resten der Formel Ia bzw. Ib entsprechenden Verbindungen, worin die freie Valenz durch eine $X^1$ bis $X^5$ entsprechende Gruppe abgesättigt ist und gegebenenfalls $Q^1$ H bedeutet, sind bereits als diskotische Flüssigkristalle bekannt [DE—OS 33 32 955; B. Kohne und K. Praefcke, Angew. Chem. *96* (1984), 70—71; Z. Luz, W. Poules, R. Poupko, K. Praefcke und B. Scheuble, 21. Bunsen-Collogium, TU Berlin, Sept./Okt. 1983].

Die mesogenen Gruppen können direkt an die Polymerkette gebunden sein. Vorzugsweise sind diese Gruppen jedoch über eine acyclische Kette (Spacer) an die Polymerkette gebunden. Der Spacer kann insbesondere eine substituierte oder unsubstituierte Alkylengruppe sein, wobei eine oder mehrere nicht benachbarte $CH_2$-Gruppen durch eine Gruppierung aus der gruppe —O—, —S—, —O—CO—, —CO—O—, —S—CO—, —CO—S—, —SO— und —$SO_2$— ersetzt sein können. Weiterhin können zwei benachbarte $CH_2$-Gruppen der Alkylengruppe durch —C≡C— oder —CH=CX— ersetzt sein, worin X Wasserstoff, Halogen, vorzugsweise Fluor oder Chlor, CN oder eine Alkylgruppe mit 1 bis 5 C-Atomen, vorzugsweise $CH_3$, bedeutet. Besonders bevorzugte Spacer sind diejenigen der Formel III

$$—(CH_2)_n—Q^2— \qquad III$$

worin $Q^2$ eine Einfachbindung oder —CO—S—, —CO—O—, —O—CO—, —CO—, insbesondere —O—, —S—, —SO— oder —$SO_2$— bedeutet und n 3 bis 20, vorzugsweise 10 bis 15 ist.

Weiterer Gegenstand der Erfindung ist ein Verfahren zur Herstellung von Polymerzusammensetzungen der Formel Ia/b sowie deren Verwendung als organische Halbleiter in der Elektronik für die Faser- und Folientechnik.

So können monomere Verbindungen der Formel II,

$$\text{Y-Spacer-M} \qquad II$$

worin M eine mesogene Gruppe der Formel Ia/b und Y eine zur Polymerisation befähigte funktionelle Gruppe bedeutet, polymerisiert werden, sofern Y eine in ω- oder (ω-1)-Stellung befindliche Alkenylgruppe mit 2 bis 5 C-Atomen bedeutet. Y kann mit dem Spacer über eine direkte Bindung oder über eine Gruppierung aus der Gruppe —O—, —S—, —SO—, —$SO_2$—, —CO—O—, —CO—NH—, —O—CO—NH— oder O—CO—O verbunden sein. Besonders bevorzugte Gruppierungen sind —O—, —CO—O—, —CO—NH— und —S—, insbesondere —O— und —CO—O—.

Die Polymerisation erfolgt in an sich bekannter Weise durch Einwirkung von Strahlungs-, Wärme- oder elektrischer Energie sowie durch Einwirkung radikalischer oder ionischer Katalysatoren wie z.B. beschrieben in Ocian, Principles of Polymerizaiton, McGraw-Hill, New York. Als Strahlungsenergie eignen sich UV-, Laser-, Roentgen- und radioaktive Strahlen. Elektrische Energie kann beispielsweise durch Elektrolyseverfahren erzeugt werden. Beispiele für radikalische Katalysatoren sind Kaliumpersulfat, Dibenzoylperoxid, Azo-bisisobutyronitril, Di-tert-butylperoxid und Cyclohexanonperoxid. Ionische Katalysatoren sind alkali-organische Verbindungen wie Phenyllithium und Naphthalinnatrium oder Lewissäuren wie $BF_3$, $AlCl_3$, $SnCl_4$ und $TiCl_4$ oder Metallkomplexe in Form von Aluminium- oder Titanverbindungen. Die Monomeren können in Lösung, Suspension, Emulsion oder Substanz polymerisiert werden.

Sofern Y eine Hydroxy-, Amino-, Mercapto-, Epoxid- oder Carboxygruppe oder einen ihrer reaktionsfähigen Abkömmlinge bedeutet, können die Verbindungen der Formel II auf ein polymeres Rückgrat aufgepfropft werden. Besonders bevorzugt bedeutet Y hierbei OH, $NH_2$, COOH oder einen reaktionsfähigen Abkömmling, insbesondere OH oder einen reaktionsfähigen Abkömmling der Carboxylgruppe. Diese Aufpfropfungsreaktion kann nach an sich bekannten Methoden, wie z.B. Veresterung, Amidierung, Umesterung, Umamidierung, Acetalisierung oder Veretherung erfolgen, die in der Literatur beschrieben sind [z.B. in Standardwerken wie Houben-Weyl, Methoden der Org. Chemie, Georg-Thieme-Verlag, Stuttgart oder C. M. Paleos et al., J. Polym. Sci. Polym. Chem. *19* (1981) 1427].

Eine bevorzugte Aufpfropfungsreaktion besteht in der Umsetzung mesogene Gruppen der Formel I a/b tragender Monomere mit Organopolysiloxanen. Hierzu werden, wie z.B. in EP—PS 0060335 beschrieben, lineare oder cyclische Organowasserstoffpolysiloxane mit ethylenisch ungesättigten, mesogenen Monomeren der Formel II (Y bedeutet eine in ω- oder (ω-1)-Stellung befindliche Alkenylgruppe mit 2 bis 5 C-Atomen) in etwa äquimolaren Mengen, bezogen auf die Menge Siloxan-Wasserstoff, in Gegenwart eines die Addition von Silan-Wasserstoff an aliphatische Mehrfachbindungen fordernden Katalysators umgesetzt.

Als polymeres Rückgrat kommen prinzipiell alle Polymeren in Frage, deren Ketten eine gewisse Flexibilität aufweisen. Es kann sich hierbei um lineare, verzweigte oder cyclische Polymerketten handeln. Der Polymerisationsgrad beträgt normalerweise mindestens 10, vorzugsweise 20—100. Es kommen jedoch auch Oligomere, insbesondere cyclische Oligomere, mit 3 bis 15, insbesondere mit 4 bis 7 Monomereinheiten, in Frage.

Vorzugsweise werden Polymere mit C—C-Hauptketten, insbesondere Polyacrylate, -methacrylate, -α-halogenacrylate, -α-cyanacrylate, -acrylamide, -acrylnitrile oder -methylenmalonate eingesetzt. Weiterhin bevorzugt sind auch Polymere mit Heteroatomen in der Hauptkette, beispielsweise Polyether, -ester, -amide, -imide oder -urethane oder insbesondere Polysiloxane.

Entsprechende terminal funktionalisierte Verbindungen, d.h. Verbindungen, in denen mindestens eine der Seitengruppe am Sechsring in ω- oder (ω-1)-Stellung eine funktionelle Gruppe trägt, können nach an sich bekannten Methoden hergestellt werden, wie sie in der Literatur (z.B. in den Standardwerken wie Houben-Weyl, Methoden der organischen Chemie, Georg-Thieme-Verlag, Stuttgart oder in DE—OS 33 32 955) beschrieben sind, und zwar unter Reaktionsbedingungen, die für die genannten Umsetzungen bekannt und geeignet sind. Dabei kann man auch von an sich bekannten, hier nicht näher erwähnten Varianten Gebrauch machen.

Bevorzugte Ausgangsmaterialien sind pentasubstituierte Halogenbenzole (M-Halogen), Pentahalogenbenzole [Y-spacer-$C_6$(Halogen$_5$], worin Y gegebenenfalls durch eine Schutzgruppe blockiert sein kann, scyllo-Inosit-Derivate [Y-Spacer-$C_6H_5(OH)_5$], pentasubstituierte scyllo-Inosit-Derivate (M-OH; M=Ia), myo-Inosose, pentasubstituierte myo-Inosose-Derivate.

So lassen sich Verbindungen der Formel IV

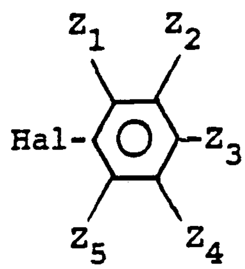

IV

worin

Hal F, Cl, Br oder I,

$Z_1$ bis $Z_5$ jeweils voneinander unabhängig H, OH oder SH bedeuten, wobei mindestens zwei der Substituenten $Z_1$ bis $Z_5$ von H verschieden sind,

durch Umsetzung mit Alkylhalogeniden oder — sulfonaten und eventueller anschließender Oxidation, oder mit Carbonsäuren oder Thiocarbonsäuren oder den reaktionsfähigen Derivaten von Carbon-, Thiocarbon-, Kohlen- oder Carbaminsäuren zu Verbindungen der Formel V umsetzen,

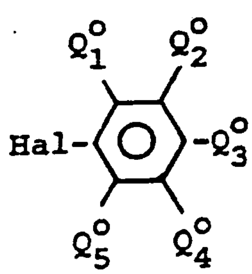

V

worin

Hal F, Cl, Br oder I

$Q_1^0$ bis $Q_5^0$ OR, SR, COR, OCO—OR, OCO—NHR, S—COR, SO—R oder $SO_2$—R bedeuten, worin R eine Alkylgruppe mit bis zu 14 C-Atomen bedeutet, wobei mindestens zwei der Substituenten $Q_1^0$ bis $Q_5^0$ von H verschieden sind.

Vorzugsweise ist Hal Cl oder Br und $Q_1^0$ bis $Q_5^0$ OR, SR, COR, SO—R oder $SO_2$—R, insbesondere OR, SR oder $SO_2R$.

Verbindungen der Formel VII,

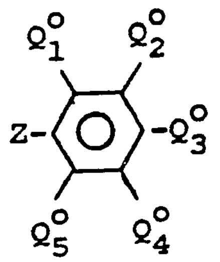

VII

worin

Z OH oder SH bedeuten und

$Q_1^0$ bis $Q_5^0$ die bei der Formel V angegebene Bedeutung besitzen und worin vorzugsweise $Q_1^0$ bis $Q_5^0$ OR, SR, COR, SO—R oder $SO_2R$, insbesondere OR, SR oder $SO_2R$ ist,
werden erhalten aus Verbindungen der Formel V oder der Formel VI,

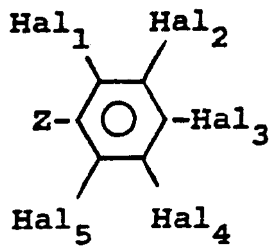

VI

worin

Z OH oder SH,

$Hal_1$ bis H, F, Cl, Br oder I bedeuten, wobei mindestens zwei der Substituenten $Hal_1$ bis $Hal_5$ von H verschieden sind und $Hal_1$ bis $Hal_5$ vorzugsweise Cl oder Br bedeuten,
durch Umsetzung mit Alkali- oder Erdalkalihydroxiden oder -hydrogensulfiden (im Falle der Verbindungen der Formel V), oder mit Alkoholen, Thiolen, Carbonsäuren oder Thiocarbonsäuren oder deren reaktionsfähigen Derivaten oder reaktionsfähigen Derivaten von Kohlen- und Carbaminsäure.

Verbindungen der Formel VIII,

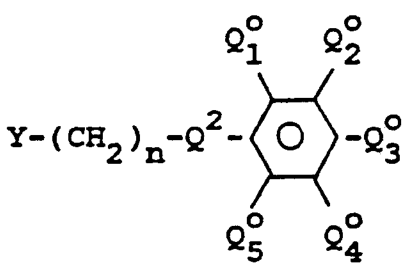

VIII

worin

$Q^2$ die in Formel III und

$Q_1^0$ bis $Q_5^0$ die in Formel V angegebene Bedeutung besitzen, und n 3 bis 20, vorzugsweise 10—15 ist, werden erhalten aus Verbindungen der Formel V oder VII durch Umsetzung mit Alkylhalogeniden oder -sulfonaten und gegebenenfalls anschließender Oxidation, oder mit Carbonsäuren oder Thiocarbonsäuren oder den reaktionsfähigen Derivaten von Carbon-, Thiocarbon-, Kohlen- oder Carbaminsäuren, wobei die terminale Gruppe Y gegebenenfalls mit einer geeigneten Schutzgruppe versehen ist und

Y die in Formel II angegebene Bedeutung besitzt.

Aus Verbindungen der allgemeinen Formel IX,

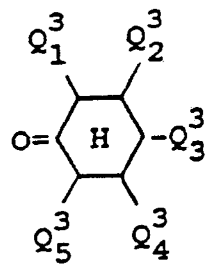

IX

worin

$Q_1^3$ bis $Q_5^3$ H, OH, SH, COOH oder $CH_2OH$ bedeuten, wobei mindestens zwei der Substituenten $Q_1^3$ bis $Q_5^3$ von H verschieden sind und $Q_1^3$ bis $Q_5^3$ vorzugsweise OH, SH oder COOH bedeuten,

können durch chemische Umsetzung mit Alkylhalogeniden oder -sulfonaten und gegebenenfalls anschließender Oxidation, oder mit Carbonsäuren oder Thiocarbonsäuren oder den reaktionsfähigen Derivaten von Carbon-, Thiocarbon-, Kohlen- oder Carbaminsäuren.

Verbindungen der allgemeinen Formel X erhalten werden,

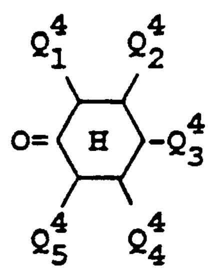

X

worin

$Q_1^4$ bis $Q_5^4$ OR, SR, SO—R, $SO_2$—R, OCO—R, SCO—R, COOR oder $CH_2OR$ bedeuten, worin R eine Alkylgruppe mit bis zu 14 C-Atomen bedeutet und wobei mindestens zwei der Substituenten $Q_1^4$ bis $Q_5^4$ von H verschieden sind, wobei $Q_1^4$ bis $Q_5^4$ vorzugsweise OR, SR, SO—R, $SO_2$—R oder COOR, insbesondere OR, SR und $SO_2$—R bedeuten.

Durch chemische Umsetzung mit Reduktions- oder Alkylierungsmitteln werden daraus Verbindungen der allgemeinen Formel XI erhalten

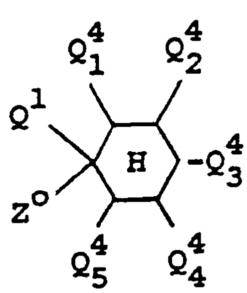

XI

worin

$Q_1^4$ bis $Q_5^4$ die in Formel X angegebene Bedeutung besitzen,

$Q^1$ H, Alkyl oder Alkoxy mit 1—5 C-Atomen, F, Cl, Br oder CN, und

$Z^o$ OH oder SH bedeuten und wobei $Q^1$ vorzugsweise H, Alkyl oder Alkoxy mit 1 bis 5 C-Atomen, F, Cl oder CN, insbesondere H, alkyl mit 1 bis 4 C-Atomen, F oder CN bedeutet und $Q_1^4$ bis $Q_5^4$ vorzugsweise OR, SR, SO—R, $SO_2$—R oder COOR, insbesondere OR, SR und $SO_2$—R bedeuten.

Aus Verbindungen de Formel X oder XI werden durch Umsetzung mit Alkylhalogeniden oder -sulfonaten und gegebenenfalls anschließender Oxidation, oder mit Carbonsäuren oder Thiocarbonsäuren oder den reaktionsfähigen Derivaten von Carbon-, Thiocarbon-, Kohlen- oder Carbaminsäuren, wobei die terminale Gruppe Y gegebenenfalls mit einer geeigneten Schutzgruppe versehen ist, Verbindungen der allgemeinen Formel XII erhalten,

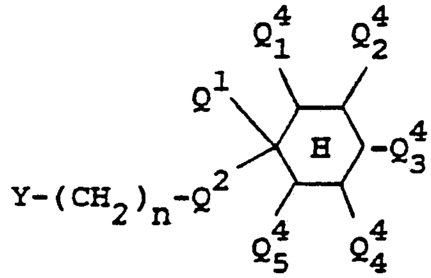

XII

worin

$Q_1^4$ bis $Q_5^4$ die in Formel X,

$Q^1$ die in Formel I,

$Q^2$ die in Formel III,

Y die in Formel II angegebene Bedeutung besitzen und

n 3—20, vorzugsweise 10—15 ist. $Q_1$ ist vorzugsweise H, Alkyl oder Alkoxy mit 1—5 C-Atomen, F, Cl oder CN, insbesondere H, Alkyl mit 1—4 C-Atomen, F oder CN, $Q^2$ ist vorzugsweise —CO—S—, —O—, —S—, —CO—O—, —SO— oder —$SO_2$—, insbesondere —O—, —S—, —$SO_2$— oder —CO—O—. $Q_1^4$ bis $Q_5^4$ sind vorzugsweise identisch und bedeuten OR, SR, SO—R odr COOR, insbesondere OR, SR und $SO_2R$.

Die Zwischenprodukte V und VII, VIII, IX X, XI und XII sind teilweise bekannt, größtenteils jedoch neu. Ihre Herstellung erfolgt nach an sich bekannten Methoden, wie sie in der Literatur (z.B. in Standardwerken wie Houben-Weyl, Methoden der Organischen Chemie, Georg-Thieme-Verlag, Stuttgart) beschrieben sind, und zwar unter Reaktionsbedingungen, die für die genannten Umsetzungen bekannt und geeignet sind. Dabei kann man auch von an sich bekannten, hier nicht näher erwähnten Varianten Gebrauch machen. Sie dienen zur Herstellung der erfindungsgemäßen flüssigkristallinen Polymerzusammensetzungen.

Die bei der Herstellung von V bis XII angegebenen Verfahren sind an sich bekannt (z.B. aus Standardwerken wie Houben-Weyl, Methoden der Org. Chemie, Georg-Thieme-Verlag, Stuttgart). Normalerweise werden die für die genannten Umsetzungen bekannten Reaktionsbedingungen eingehalten. Man kann jedoch auch von an sich bekannten, hier nicht näher erwähnten Varianten Gebrauch machen.

Die Ausgangsmaterialien IV, VI und IX sind teilweise bekannt (Beilstein *6* IV 1069, 7920). Alle Verbindungen IV, VI und IX sind nach an sich bekannten Verfahren herstellbar.

Die niedermolekularen Verbindungen der Formel II weisen teilweise breite diskotische Phasenbereiche auf. Verbindungen der Formel II, die keine Mesophasen aufweisen, sind jedoch auch zur Herstellung der erfindungsgemäßen Polymerzusammensetzungen geeignet.

Die Herstellung von Homo- oder Copolymeren aus den polymerisationsfähigen Verbindungen der Formel III oder deren polymerisationsfähigen Derivaten erfolgt vorzugsweise durch radikalische Polymerisation. Die Reaktion wird beispielsweise durch UV-Bestrahlung oder Radikalbildner gestartet. Die Monomeren können in Lösung oder in Substanz polymerisiert werden.

Erfindungsgemäße flüssigkristalline Phasen aufweisende Copolymerzusammensetzungen werden durch Copolymerisation von polymerisationsfähigen Verbindungen der Formel II oder deren polymerisationsfähigen Derivaten mit Monomeren erhalten, die keine mesogenen Reste tragen, die andere mesogene Reste (z.B. rod-like) tragen, die chirale Reste (z.B. DE—OS 28 31 909) tragen oder die Farbstoffreste (DE—OS 32 11 400) tragen.

Die Copolymerisation mit solchen Monomeren führt, ausgehend von einer Monomerenmischung mit der Konzentration $X_1$, nur dann zu einem Copolymerisat mit dem Einbauverhältnis entsprechend der Monomerkonzentration $X_1$, wenn die Copolymerisationsparameter der Monomerkomponenten von vergleichbarer Größenordnung sind. Das ist besonders dann von Bedeutung, wenn problemlos, z.B. ohne Berücksichtigung der Reaktionskinetik, ein Copolymer bestimmter Zusammensetzung hergestellt werden soll. Deshalb wählt man vorzugsweise Monomerkomponenten, die vergleichbare Copolymerisationsparameter aufweisen, nämlich Acrylsäure- oder Methacrylsäurealkylester, die sich in erster Linie durch den Substituenten der alkylkette unterscheiden.

Die Copolymerisation mit Monomeren, die keinen mesogenen Rest tragen, führt im allgemeinen zu einer Erniedrigung der Glastemperatur und des Klärpunktes. Durch geeignete Auswahl des Spacers ist es oftmals möglich, den Mesophasenbereich in den für den jeweiligen Anwendungszweck geeigneten Temperaturbereich zu bringen.

Als Monomere mit chiralem Rest können prinzipiell alle derartigen Verbindungen mit asymmetrischen C-Atomen verwendet werden. Vorzugsweise werden jedoch Verbindungen der Formel II oder deren polymerisationsfähige Derivate eingesetzt, in denen M eine mesogene Gruppe der Formel Ia oder Ib bedeutet, worin einer der Reste $X^1$ bis $X^5$ oder gegebenenfalls $Q^1$ eine Alkylgruppe bedeutet, worin eine $CH_2$-Gruppe durch —$CHCH_3$— ersetzt ist.

Schließlich ergeben sich zahlreiche weitere Variationsmöglichkeiten wegen des Umstandes, daß die erfindungsgemäßen Verbindungen flüssigkristalline Eigenschaften mit typischen Polymereigenschaften, wie Fähigkeit zur Schicht-, Folien- und Faserbildung, liechte Verformbarkeit usw., vereinigen. Diese

Eigenschaften können in an sich bekannter Weise durch Copolymerisation oder Vermischen mit weiteren Komponenten, durch Variation der Moleckulargewichte, durch Zusätze der verschiedensten anorganischen oder organischen Additive und metalle und durch viele weitere, dem Polymerfachmann geläufige Behandlungen modifiziert werden.

Die erfindungsgemäßen Polymerzusammensetzungen lassen sich als Ausgangsmaterial zur Herstellung von organischen Gläsern mit in breiten Bereichen modifizierbaren anisotropen Eigenschaften verwenden.

Derartige Anwendungen ergeben sich beispielsweise auf dem Sektor von Licht- und Sonnenkollektoren oder bei organischen phototropen Gläsern. Ein wichtiges Anwendungsfeld eröffnet sich ferner auf dem Gebiet der optischen Speicher.

Weitere Anwendungsmöglichkeiten erschließen sich auf dem Gebiet der magnetischen Speicher. Insbesondere eignen sich die erfindungsgemäßen Zusammensetzungen auch als Matrix für Substanzen mit nicht linear optischen Eigenschaften zur Herstellung von "non linear"-optischen Bauelementen.

Zur Erläuterung der Erfindung dienen folgende Beispiele:

Beispiel 1 (Vergleichsbeispiel)

1a. 1.1 Mol Pentachlorphenol, 1 Mol 1-Brom-n-decanol-10, 1 Mol NaH und 3 l Tetrahydrofuran werden 48 h refluxiert; es scheidet sich Natriumchlorid aus. Nach Filtration wird das Lösungsmittel abgezogen, der Rückstand 2 mal mit 5%iger Natronlauge, 1 mal mit ges. Kochsalzlösung und nachfolgend mit Wasser gewaschen. Zurück bleibt ein zähes Öl:

$^1$H-NMR ($CD_3SOCD_3$):

$\delta$ = 3,31 (t, 2H), 3,24 (t, 2H), 2,60—2,71 (S, 1H), 1,21—1,94 (m, 6H).

1b. Zu der Lösung von 3 mMol Pentachlorverbindung 1a und 50 mMol 1-Mercaptotridecan in 150 ml 1,3-Dimethylimidazolidinon fügt man 50 mMol NaH hinzu und erwärmt nach Abklingen der Wasserstoffentwicklung 2 Std. unter Stickstoff auf 100°. Zur Aufarbeitung wird mit 500 ml Wasser versetzt und 3× mit je 200 ml Ether ausgezogen. Die mit Wasser gewaschenen Etherauszüge hinterlassen nach Trocknen und Eindampfen in 65% Ausbeute ein hellgelbes Wachs.

IR: $V_{OH}$ 3620 $cm^{-1}$.

1c. in 1b erhaltener Pentakisthioether (0,1 Mol) wird in 500 ml Dichlormethan gelöst und unter Rühren mit der Lösung von 200 g 3-Chlorperbenzoesäure in 1 l Dichlormethan langsam versetzt. Der nach 2-stündigem Rühren bei Raumtemperatur ausgefallene Niederschlag wird abgesaugt und getrocknet. Ausbeute: 86% eines amorphen Feststoffes.

IR (KBr): $V_{OH}$ 3624 $cm^{-1}$

$V_{SO_2}$ 1155 u. 1325 $cm^{-1}$.

1d. Zu der Lösung von 0,5 Mol Alkohol 1c in 350 ml abs. Dichlormethan u. 0,5 Mol Triethylamin tropft man unter Kühlen mit Eiswasser 0,5 Mol Methacryloylchlorid derart zu, daß die Innentemperatur +5°C nicht überschreitet. Nach beendeter Zugabe wird noch 1 Std. bei Raumtemperatur nachgerührt; ausgefallenes Triethylammoniumchlorid wird abgesaugt und das Filtrat mit Wasser gewaschen und getrocknet. Nach Abziehen des Lösungsmittels im Vakuum hinterbleiben 88% d.Th. eines gelben Öls.

IR: $V_{C=O}$ 1725 $cm^{-1}$.

1e. 0,25 Mol in 1d erhaltener Methacrylsäure-10-[pentakis(tridecylsulfonyl)phenoxy]decylester und 0,2 Mol Poly(methylsiloxan) (mittl. Polymerisationsgrad ca. 35) werden in 50 ml tr. Benzol gelöst. Unter Durchleiten von Stickstoff fügt man 1 mg eines Dicyclopentadienylplatindichloridkatalysators hinzu und hält 6 Std. bei 80°C. Anschließend wird durch Zugabe von Ethanol das Polymere ausgefällt.

Beispiel 2 (Vergleichsbeispiel)

2a. 0,2 Mol 9-Mercaptoundec-1-en werden in 100 ml. Hexamethylphosphortriamid gelöst und unter Rühren mit 0,2 Mol Natriumhydrid versetzt. Nach Abklingen der $H^2$-Entwicklung fügt man 0,1 Mol Pentakis(tridecylthio)-chlorbenzol zu und rührt 3 Std. bei 100° Anschließend wird auf 500 ml Wasser gegossen, mit 3 × 150 ml Ether extrahiert, die vereinigten Extrakte mit Wasser gewaschen und getrocknet. Nach Entfernen des Lösungsmittels im Vakuum hinterbleiben 66% Th, eines dunklen Öls, das ohne Reinigung weiter umgesetzt wird.

2b. Zu der Lösung von 0,1 Mol Olefin 2a in 250 ml abs. THF tropft man bei 0° 0,12 Mol einer Lösung von Diboran in THF. Nach beendeter Zugabe wird noch 1 Std. bei Raumtemperatur weitergerührt. Anschließend fügt man 30 ml einer 3 M Natronlauge zu, gefolgt von der tropfenweise Zugabe von 36 ml einer 30%igen Wasserstoffperoxidlösung. Es wird noch 1 Std. bei 25—30° gerührt und der gebildete Alkohol mittels Etherextraktion isoliert.

Ausbeute: 93% d.Th. helles Öl;

IR: $V_{OH}$ 3630 $cm^{-1}$.

2c. Die Lösung von 0,1 Mol des in 2b erhaltenen Hexasulfids in 300 ml Eisessig wird mit 10 ml 85% Wasserstoffperoxid versetzt und über Nacht bei Raumtemperatur gerührt. Den ausgefallenen Niederschlag saugt man unter Nachwaschen mit Ether ab und trocknet. So werden 81% d.Th. eines gelben amorphen Hexasulfons erhalten.

IR (KBr): $V_{OH}$ 3620 $cm^{-1}$, $V_{SO_2}$ 1150 u. 1325 $cm^{-1}$.

2d. 0,1 Mol (11-Hydroxyundecylsulfonyl)-pentakis(tridecylsulfonyl)benzol 2c werden in 150 ml abs. Dichlormethan und 0,1 Mol Triethylamin gelöst und bei $\leqq +5°$ mit 0,1 Mol Methacryloylchlorid versetzt. Anschließend rührt man noch 2 Std. bei 20°, wäscht mit Wasser gut aus, trocknet und dampft im Vakuum zum Rückstand ein.

Der amorphe Feststoff zeigt im IR(KBr) Absorptionen für die Sulfonylgruppe ($V_{SO}$ 1155 u. 1325 $cm^{-1}$) und Carbonylgruppe ($V_{CO}$ 1730 $cm^{2-1}$).

2e. Die Lösung von 0,1 Mol Methacrylsäure-11-{[pentakis(tridecylsulfonyl)]phenylsulfonyl}undecylester 2d in 300 ml Tetrahydrofuran wird unter Stickstoff 4 Std. mit einer Quecksilberhochdrucktauchlampe bestrahlt. Durch Zugabe von Methanol kann das Polymere als opake Masse ausgefällt werden.

Beispiel 3 (Vergleichsbeispiel)

Lösungen von Pentamethylcyclopentasiloxan (0,1 Mol) und Undec-10-enylthio-pentakis(tridecylthio)-benzol (1 Mol) in THF werden unter Zusatz von 0,1 g Hexachlorplatin(IV)-säure bei 60° vereinigt und 12 Std. bei dieser Temperatur gerührt. Nach Abziehen des Lösungsmittels und Trocknen im Hochvakuum werden 90% d.Th. eines amorphen Feststoffes erhalten.

$IR_{Si-O}$ 1050 $cm^{-1}$.

Zur Oxidation wird das oben erhaltene Polysulfid in Eisessig gelöst und mit überschüssigem 85%igem Wasserstoffperoxid behandelt. Das in Eisessig unlösliche Sulfon zeigt im IR (KBr) für die Sulfonylgruppen Banden bei 1160 und 1330 $cm^{-1}$.

Beispiel 4

4a. Die Suspension von 0,1 Mol Pentahydroxycyclohexanon, 0,1 Mol 1-Bromundecan und 0,1 Mol Cesiumcarbonat in 300 ml DMF wird 3 Std. bei 100°C gerührt. Anschließend gießt man auf 3 l Eiswasser und extrahiert 4× mit je 250 mit je 250 ml Dichlormethan. Die vereinigten Extrakte werden mit Wasser gewaschen und getrocknet. Durch Eindampfen im Vakuum erhält man 67% d.Th. öliges Produkt.

IR: $V_{C=O}$ 1715 $cm^{-1}$.

4b. Eine aus 0,1 Mol Methyliodid und 0,1 Grammatomen Magnesium in 150 ml Ether bereitete Losung von Methylmagnesiumiodid läßt man langsam zu der gerührten Lösung von 0,1 Mol Cyclohexan 4a in 100 ml Ether tropfen. Zur Vervollständigung der Reaktion wird anschließend noch 1 Std. zum Rückfluß erhitzt. Man zersetzt das Reaktionsgemisch durch Zugabe von 200 ml ges. Ammoniumchloridlösung, trennt die organische Phase ab und extrahiert noch 2× mit je 150 ml Ether. Nach Waschen mit Wasser und Trocknen über Natriumsulfat werden nach Abdestillieren des Lösungsmittels 73% d.Th. eines nahezu farblosen Öls erhalten:

IR: $V_{OH}$ 3615 $cm^{-1}$.

4c. In die Lösung von 0,2 Mol des tert. Alkohol aus 4b und 0,2 Mol Dicyclohexylcarbodiimid in 400 ml Dichlormethan tropft man bei 5—10°C die Lösung von 0,2 Mol Undec-10-ensäure in 100 ml Dichlormethan. Nach 2 Std. Rühren bei 20° wird der ausgefallene Dicyclohexylharnstoff abgesaugt und das Filtrat zum Rückstand eingeengt.

IR: $V_{CO}$ 1745 $cm^{-1}$.

4d. Die Lösung von 0,1 Mol ungesättigtem Ester 4c in 200 ml Ether wird bei 20° langsam mit 50 ml 40%iger Peressigsäure versetzt. Man läßt 20 Stdn. stehen, gießt dann in eine gesättigte wäßrige Kaliumcarbonatlösung, trennt die Etherschicht ab und trocknet mit Natriumsulfat. Nach dem schonenden Entfernen des Lösungsmittels im Vakuum hinterbleibt das Epoxid als instabiles Öl.

4e. Nach 4d erhaltener ungesättigter Ester (0,1 Mol) wird in 200 ml Diglyme gelöst und bei einer Temperatur von $\leqq +5°$ mit 0,12 Mol einer Lösung von Diboran in THF versetzt. Anschließend rührt man noch 2 Std. bei RT nach, fügt 30 ml einer 3 M Natronlauge zu, gefolgt von 36 ml einer 30%igen Wasserstoffperoxidlösung. Man rührt noch 2 Std. bei 20°, versetzt mit 500 ml Eiswasser und extrahiert 3× mit 200 ml Dichlormethan. Die vereinigten organischen Phasen werden mit Natriumsulfat getrocknet. Nach Filtration vom Trockenmittel werden 0,1 Mol Triethylamin zugesetzt und bei 0—5°C mit 0,1 Mol Acryloylchlorid versetzt. 2 Std. Nachrühren bei 20°, Waschen mit Eiswasser und Trocknen führt nach Abziehen des Lösungsmittels zu 68% d.Th. öligem ungesättgtem Ester.

IR: $V_{C=O}$ 1720 $cm^{-1}$.

4f. Die Lösung von 0,05 Mol Acrylasäure-10-{[2,4,6c-3,5t-pentakis(undecyloxy)-1t-methyl]cyclohexyl-1r-oxycarbonyl}decylester in 100 ml Toluol wird nach Zusatz von 0,5 g Azobis(isobutyronitril) 12 Std. auf 90° erwärmt. Beim Abkühlen scheidet sich das Polymerprodukt gelartig aus. Zugabe von Ethanol führt zu einem filtrierbaren amorphen Produkt.

Beispiel 5

5a. Zu der Suspension von 0,5 Mol Natriumhydrid in 1 l THF tropft man die Lösung von 0,1 Mol myo-Inosit in 500 ml des gleichen Lösungsmittels. Nach beendeter Wasserstoffentwicklung wird mit 0,5 Mol 1-Brom-heptan versetzt. Es wird 10 Std. bei 50°C gerührt, von ausgeschiedenem Natriumbromid abfiltriert und das Filtrat zum Rückstand eingedampft. Umlösen aus Diisopropylether liefert 81% d.Th. reines Produkt als amorphen Feststoff.

IR: $V_{OH}$ 3615 $cm^{-1}$.

5b. Die Lösung von 0,5 Mol 2,4,6c-3,5t-Pentakisheptyloxycyclohexan-1r-ol in 1 l Dichlormethan u. 0,5 Mol Triethylamin wird portionsweise mit 0,5 Mol Toluolsulfonylchlorid versetzt. Nach beendeter Reaktion wird mehrmals mit Wasser gewaschen, getrocknet und eingedampft. Das zurückbleibende instabile Tosylat wird rasch weiter umgesetzt, indem seine Lösung in 1,2 l DMF und 1 Mol Kaliumethylthioxanthogenat bei 60°C 4 Std. gerührt wird. Anschließend wird auf 4 l Eiswasser gegossen, 3× mit je 1 l Ether extrahiert und über Magnesiumsulfat getrocknet. Nach Entfernen des Lösungsmittels wird das zurückgebliebene, ölige Xanthogenat mit 2 l konz. Ammoniaklösung 2 Std. zum Rückfluß erhitzt. Man läßt erkalten, extrahiert das ausgeschiedene Öl mit Ether und erhält nach desen Abziehen in 64% d.Th. (bez. auf Cyclohexanol 5a) das gewünschte Mercaptan als gelbes, zähes Öl.

IR: $V_{SH}$ 2565 $cm^{-1}$.

5c. Zu der Lösung von 0,1 Mol Mercaptan 5b in 350 ml THF und 0,1 Mol Triethylamin tropft man bei 20° 0,1 Mol 11-Bromundecanol. Nachdem 4 Std. bei dieser Temperatur weitergerührt worden ist, saugt man von ausgefallenem Triethylammoniumbromid ab und engt das Filtrat zum Rückstand ein. Ausbeute 92% d.Th.

IR: $V_{OH}$ 3515 $cm^{-1}$.

5d. 0,2 Mol des vorstehend erhaltenen Alkohols 5c werden in 500 ml Dichlormethan und 0,2 Mol Triethylamin gelöst. Bei +5° tropft man 0,2 Mol Methacryloylchlorid zu, hält noch 30 Min bei dieser Temperatur und rührt anschließend 1 Std. bei Raumtemperatur. Es wird mit Wasser neutral gewaschen, getrocknet und in Vakuum schonend vom Lösungsmittel befreit. Es bleiben 78% d.Th. eines nahezu farblosen Öls zurück.

IR: $V_{C=O}$ 1725 $cm^{-1}$.

5e. Analog zu Beispiel le wird aus Methacrylsäure-11-{[2,4,6c-3,5t-pentakis(heptyloxy)]cyclohex-1r-ylthio}undecylester 5d mit Poly(methylsiloxan-codimethylsiloxan) ein glasartiges Polymer erhalten.

Beispiel 6

6a. 0,1 Mol scyllo-Inosit in 250 ml Dichlormethan und 0,6 Mol Triethylamin werden portionsweise mit 0,6 Mol Tosylchlorid versetzt. Man läßt 2 Std. bei Raumtemperatur nachrühren, wäscht mit Eiswasser gut aus und trocknet über Natriumsulfat.

Das nach dem schonenden Abdampfen des Lösungsmittels im Vakuum erhaltene Tosylat wird in 800 ml DMSO aufgenommen, mit 1 Mol Kaliumethylthioxanthogenat versetzt und 6 Stdn. bei 65°C gerührt. Man läßt auf Raumtemperatur abkühlen und gibt unter gleichzeitigem Durchleiten von Stickstoff durch das Reaktionsgemisch 500 ml konz. Ammoniaklösung zu. Man erhitzt darauf auf ca. 80°C, verdünnt nach 4 Std. mit Eiswasser auf 5 l und schüttelt mehrmals mit Ether aus. Die mit Wasser gewaschenen und getrockneten Etherphasen hinterlassen nach dem Eindampfen 70% d.Th. eines gelben Öls.

IR: $V_{SH}$ 1560 $cm^{-1}$.

6b. Das Gemisch aus 0,3 Mol (1,3,5c-2,4,6t)-Hexamercaptocyclohexan 6a, 0,3 Mol 11-Bromundecanol, 500 ml DMF und 0,15 Mol Kaliumcarbonat wird 2 Stdn. bei 50°C gerührt.

Anschließend wird im Vakuum das Lösungsmittel entfernt, der Rückstand mit 1 l Wasser versetzt und mehrmals mit Ether ausgezogen. Nach Abdampfen des Ethers bleiben 94% d.Th. Alkohol zurück.

IR: $V_{OH}$ 3620 $cm^{-1}$, $V_{SO}$ 2550 $cm^{-1}$.

6c. 0,1 Mol der obigen Pentamercaptoverbindung 56b in 200 ml Ethanol werden nach Zusatz von 0,5 Mol Natriumhydroxid und 0,5 Mol 1-Bromheptan 10 Std. unter Stickstoff zum Rückfluß erhitzt. Nach Abkühlen auf Raumtemperatur wird von ausgeschiedenem Natriumbromid abfiltriert und das Filtrat zum Rückstand eingeengt. Den Rückstand nimmt man in Ether auf, filtriert erneut und dampft ein. Es wurden so 86% d.Th. eines dunkelgelben Öls erhalten.

IR: $V_{OH}$ 3625 $cm^{-1}$.

6d. Man kocht 0,2 Mol des Polythioethers 6c mit einem 20%igen Überschuß an 85%iger 3-Chlorperbenzoesäure in 150 ml Chloroform 36 Std. Nach Abkühlen wird mit Sodalösung säurefrei gewaschen, getrocknet und eingedampft. Es bleiben 96% d.Th. eines amorphen Feststoffes zurück.

IR: $V_{OH}$ 3625 $cm^{-1}$, $V_{SO_2}$ 1150 u. 1320 $cm^{-1}$.

6e. 0,1 Mol von Sulfonalkohol 6d, 0,1 Mol Methacryloylchlorid u. 200 ml Trifluoressigsäure werden 3 Std. bei 20° gerührt. Nach Eindampfen werden 89% d.Th. öliger Ester erhalten.

IR: $V_{SO_2}$ 1150 u. 1320 $cm^{-1}$, $V_{C=O}$ 1720 $cm^{-1}$.

6f. Die Lösung von 0,5 Mol Methacrylsäure-10-{[pentakis(heptylsulfonyl)-cyclohex-1r-yl]sulfonyl}-decylester und 0,45 Mol Poly(methylsiloxan) in 300 ml Tetrahydrofuran wird nach Zusatz von 0,01 Mol Azobis(isobutyronitril) unter Stickstoff 10 Stdn. zum Rückfluß erhitzt. Zusatz von Methanol fällt das Polymere aus.

Beispiel 7 (Vergleichsbeispiel)

7a. 0,5 Mol Hexakis(2-hydroxyethyl)benzol, 0,5 Mol 11-Bromundecanoylchlorid u. 700 ml Trifluoressigsäure werden 2 Stdn. bei Raumtemperatur gerührt. Nach Eindampfen u. üblicher Aufarbeitung erhält man 92% d.Th. Monester als farbloses Öl.

IR: $V_{OH}$ 3475 $cm^{-1}$, $V_{CH}$ 1745 $cm^{-1}$.

7b. 0,4 Mol der Pentakis(hydroxyethyl)verb. 7a, 2 Mol Pentanoylchlorid und 500 ml Trifluoressigsäure werden 3 Std. bei Raumtemperatur gerührt. Nach Abdestillieren des Lösungsmittels erhält man 95% d.Th. des Hexaesters als Öl.

IR: $V_{C=O}$ 1740 $cm^{-1}$.

7c. Bei 70° tropft man zu dem Gemisch aus 0,1 Mol Hexaester 7b, 0,1 Mol Kaliumcarbonat u. 200 ml DMF langsam 0,1 Mol Methacryloylchlorid. Nach 6 Stdn. Reaktionsdauer wird erkalten gelassen, mit 1 l Eiswasser versetzt und mehrmals mit Ether ausgezogen. Die vereinigten Etherphasen liefern nach Eindampfen 68% d.Th. öliges Methacrylat.

IR: $V_{C=O}$ 1725 u. 1745 $cm^{-1}$.

7d. Analog zu Beispiel 2e wird aus Methacrylsäure-10-{[pentakis-(2-pentanoyloxyethyl)phenyl]ethoxycarbonyl}decylester und Poly(methylsiloxan-co-dimethylsiloxan) ein glasartiges Polymeres erhalten.

Beispiel 8

8a. 0,1 Mol (2,4,6c-3,5t)-Pentakis(nonyloxy)cyclohexanon, gelöst in 200 ml abs. Ether werden mit 0,1 Mol einer etherischen Lösung von (R)-2-Methyl-butylmagnesiumbromid behandelt. Nach beendeter Zugabe wird noch 30 Min zum Rückfluß erhitzt. Man läßt abkühlen und zersetzt durch Zugabe von konz. Ammoniumchloridlösung. Die organische Phase wird abgetrennt, mit Wasser gewaschen und getrocknet. Nach Entfernen des Lösungsmittels werden 79% d.Th. eines zähen Öls erhalten.

IR: $V_{OH}$ 3635 $cm^{-1}$.

8b. Die Lösung von 0,2 Mol Alkohol 8a in 150 ml abs. Pyridin wird bei 0—5° mit 0,1 Mol 11-Hydroxyundecanoylchlorid behandelt. Nach 2 Stdn. Rühren bei dieser Temperatur gießt man auf 1 kg Eis und isoliert das Reaktionsprodukt durch Extraktion mit Ether. Nach Entfernen des Lösungsmittels auf dem Wasserbad erhält man 78% d.Th. Ester als helles Öl.

IR: $V_{CH}$ 1740 $cm^{-1}$.

8c. 0,1 Mol des vorstehenden Alkohols 8b in 250 ml Dichlormethan und 0,1 Mol Triethylamin werden bei 0—5°C mit 0,1 Mol Methacryloylchlorid behandelt. Nach 2 Stdn. Rühren bei dieser Temperatur wäscht man mit Eiswasser neutral, trocknet über Natriumsulfat und dampft ein. Zurück bleiben 81% d.Th. eines gelben, viskosen Öls.

IR: $V_{C=O}$ 1715 u. 1740 $cm^{-1}$.

8d. Analog zu Beispiel 3 wird aus Acrylsäure-10-{[1t-((R)-2-methylbutyl)-2,4,6c-3,5t-pentakis(nonyloxy)-cyclohex-1r-yl]oxycarbonyl}-decylester 8c und Poly(methylsiloxan) unter Zusatz von Hexachlorplatin(IV)-säure ein glasartiges Polymer erhalten.

**Beschreibung für die benannten Vertragsstaaten: NL SE**

Die Erfindung betrifft flüssigkristalline Phasen aufweisende Polymerzusammensetzungen, die gegebenenfalls mit Hilfe eines Spacers chemisch gebundene mesogene Gruppen der Formel Ia und/oder IB enthalten:

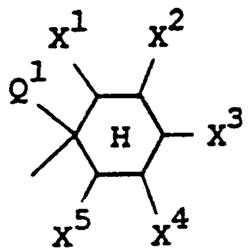

Ia

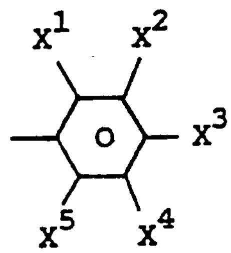

Ib

worin

$Q^1$ H, Alkyl oder Alkoxy mit 1—5 C-Atomen, F, Cl, Br oder CN,

$X^1$ bis $X^5$ jeweils unabhängig voneinander H oder eine Alkylgruppe mit bis zu 15 C-Atomen bedeuten, worin auch eine oder zwei nicht benachbarte $CH_2$-Gruppen durch eine Gruppierung aus der Gruppe —O—, —S—, —O—CO—O—, —O—CO—NHR—, —CO—, —CO—O—, —CO—S—, —S—CO—, —SO— und —$SO_2$— ersetzt sein können,

wobei mindestens zwei der Substituenten $X^1$ bis $X^5$ von H verschieden sind.

Es sind bereits eine ganze Reihe von flüssigkristallinen Polymeren bekannt, beispielsweise mit 4'-Cyanbiphenyl-4-yl als mesogene Gruppe modifizierte Polyacryl- und Polymethacrylsäureester. Nematische Phasen solcher Polymerzusammensetzungen liegen meist bei Temperaturen oberhalb 100°. Durch Polymerisation von nematischen oder cholesterischen Monomeren erhält man oft höher geordnete hochviskose smektische Polymere. Polymerzusammensetzungen mit rod-like mesogenen Seitengruppen führen überdies oft zu kristallinen Polymeren ohne mesomorphe Eigenschaften. Polymere, die als mesogene Gruppen diskotische Phasen erzeugende Gruppe enthalten, sind in EP—A—140 133 beschrieben. Diese Polymere enthalten jedoch ausschließlich mesogene Gruppen mit aromatischem Charakter.

Aufgabe der vorliegenden Erfindung war es nun, flüssigkristalline Phasen auf weisende Polymerzusammensetzungen zu finden, die die beschriebenen Nachteile nicht oder nur in geringerem Maße aufweisen.

Es wurde nun gefunden, daß Polymerzusammensetzungen, die chemisch gebundene mesogene Gruppen der Formel Ia und/oder Ib enthalten, überraschend breite Mesophasenbereiche, eine in weiten Grenzen variierbare Doppelbrechung und eine positive wie negative diamagnetische Anisotropie aufweisen. Sie sind außerdem leicht zu Körpern beliebiger Form mit anisotropen Eigenschaften verarbeitbar und weisen eine hohe chemische Stabilität auf.

Gegenstand der Erfindung sind flüssigkristalline Phasen aufweisende Polymerzusammensetzungen, die — gegebenenfalls mit Hilfe eines Spacers chemisch gebundene — mesogene Gruppen enthalten, dadurch gekennzeichnet, daß diese mesogenen Gruppen der Formel Ia und/oder Ib entsprechen:

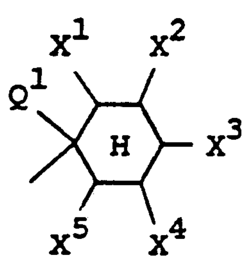

Ia

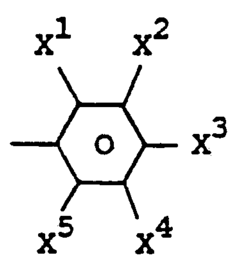

Ib

worin

$Q^1$ H, Alkyl oder Alkoxy mit 1—5 C-Atomen, F, Cl, Br oder CN,

$X^1$ bis $X^5$ jeweils unabhängig voneinander H oder eine Alkylgruppe mit bis zu 15 C-Atomen bedeuten, worin auch eine oder zwei nicht benachbarte $CH_2$-Gruppen durch eine Gruppierung aus der Gruppe —O—, —S—, —O—CO—O—, —O—CO—NHR—, —CO—, —CO—O—, —CO—S—, —S—CO—, —SO— und —$SO_2$— ersetzt sein können,

wobei mindestens zwei der Substituenten $X^1$ bis $X^5$ von H verschieden sind.

In den genannten Resten der Formel Ia ist $Q^1$ vorzugsweise H oder unverzweigtes Alkyl, vorzugsweise mit 1 bis 4 C-Atomen, insbesondere Methyl oder Ethyl sowie besonders bevorzugt CN.

In den Resten $X^1$ bis $X^5$ ist vorzugsweise jeweils eine $CH_2$-Gruppe durch eine funktionelle Gruppe ersetzt, insbesondere diejenige, die die Bindung zum zentralen Carbocyclus bildet.

$X^1$ bis $X^5$ ist bevorzugt —O—, —S—, —CO—, —CO—O—, —SO—, —$SO_2$—, insbesondere —O—, —S— und —$SO_2$.

Vorzugsweise sind mindestens 3 der Substituenten $X^1$ bis $X^5$ von H verschieden, insbesondere $X^1$, $X^3$ und $X^5$. Weiterhin bevorzugt sind mesogene Gruppen der Formel Ia und/oder Ib, in denen alle Substituenten $X^1$ bis $X^5$ von H verschieden sind, insbesondere $X^1$ bis $X^5$ gleich sind.

$X^1$ bis $X^5$ bedeuten demnach bevorzugt: Methoxy, Ethoxy, Propoxy, 1-Methylethoxy, Butoxy, 1-Methylpropoxy, 2-Methylpropoxy, 1,1-Dimethylethoxy, Pentoxy, Hexoxy, Heptoxy, Octoxy, Nonoxy, Decoxy, Undecoxy, Dodecoxy, Tridecoxy, Tetradecoxy; Methylthio, Ethylthio, Propylthio, 1-Methylethylthio, Butylthio, 1-Methylpropylthio, 2-Methyl-propylthio, 1,1-Dimethylethylthio, Pentylthio, Hexylthio, Heptylthio, Octylthio, Nonylthio, Decylthio, Undecylthio, Dodecylthio, Tridecylthio, Tetradecylthio; Acetyl, Propionyl, Butyryl, 2-Methylpropionyl, 3-Methylpropionyl, Pentanoyl, Pivaloyl, Hexanoyl, Heptanoyl, Octanoyl, Nonanoyl, Decanoyl, Undecanoyl, Dodecanoyl, Tridecanoyl, Tetradecanoyl; Methoxycarbonyl, Ethoxycarbonyl, Propoxycarbonyl, 1-Methylethoxycarbonyl, Butoxycarbonyl, 1-Methylpropoxycarbonyl, 1,1-Dimethylethoxycarbonyl, Pentoxycarbonyl, Hexoxycarbonyl, Heptoxycarbonyl, Octoxycarbonyl, Nonoxycarbonyl, Decoxycarbonyl, Undecoxycarbonyl, Dodecoxycarbonyl, Tridecoxycarbonyl, Tetradecoxycarbonyl; Methylsulfinyl, Ethylsulfinyl, Propylsulfinyl, 1-Methylethylsulfinyl, Butylsulfinyl, 1-Methylpropylsulfinyl, 2-Methylpropylsulfinyl, 1,1-Dimethylethylsulfinyl, Pentylsulfinyl, Hexylsulfinyl, Heptylsulfinyl, Octylsulfinyl, Nonylsulfinyl, Decylsulfinyl, Undecylsulfinyl, Dodecylsulfinyl, Tridecylsulfinyl, Tetradecylsulfinyl; Methylsulfonyl, Ethylsulfonyl, Propylsulfonyl, 1-Methylethylsulfonyl, Butylsulfonyl, 1-Methylpropylsulfonyl, 2-Methylpropylsulfonyl, 1,1-Dimethylethylsulfonyl, Pentylsulfonyl, Hexylsulfonyl, Heptylsulfonyl, Octylsulfonyl, Nonylsulfonyl, Decylsulfonyl, Undecylsulfonyl, Dodecylsulfonyl, Tridecylsulfonyl, Tetradecylsulfonyl.

Die den mesogenen Resten der Formel Ia bzw. Ib entsprechenden Verbindungen, worin die freie Valenz durch eine $X^1$ bis $X^5$ entsprechende Gruppe abgesättigt ist und gegebenenfalls $Q^1$ H bedeutet, sind bereits als diskotische Flüssigkristalle bekannt [DE—OS 33 32 955; B. Kohne und K. Praefcke, Angew. Chem. *96* (1984), 70—71; Z. Luz, W. Poules, R. Poupko, K. Praefcke und B. Scheuble, 21. Bunsen-Collogium, TU Berlin, Sept./Okt. 1983].

Die mesogenen Gruppen können direkt an die Polymerkette gebunden sein. Vorzugsweise sind diese Gruppen jedoch über eine acyclische Kette (Spacer) an die Polymerkette gebunden. Der Spacer kann insbesondere eine substituierte oder unsubstituierte Alkylengruppe sein, wobei eine oder mehrere nicht benachbarte $CH_2$-Gruppen durch eine Gruppierung aus der gruppe —O—, —S—, —O—CO—, —CO—O—, —S—CO—, —CO—S—, —SO— und —$SO_2$— ersetzt sein können. Weiterhin können zwei benachbarte $CH_2$-Gruppen der Alkylengruppe durch —C≡C— oder —CH=CX— ersetzt sein, worin X Wasserstoff, Halogen, vorzugsweise Fluor oder Chlor, CN oder eine Alkylgruppe mit 1 bis 5 C-Atomen, vorzugsweise $CH_3$, bedeutet. Besonders bevorzugte Spacer sind diejenigen der Formel III

$$-(CH_2)_n-Q^2- \qquad \text{III}$$

worin $Q^2$ eine Einfachbindung oder —CO—S—, —CO—O—, —O—CO—, —CO—, insbesondere —O—, —S—, —SO— oder —$SO_2$— bedeutet und n 3 bis 20, vorzugsweise 10 bis 15 ist.

Weiterer Gegenstand der Erfindung ist ein Verfahren zur Herstellung von Polymerzusammensetzungen der Formel Ia/b sowie deren Verwendung als organische Halbleiter in der Elektronik für die Faser- und Folientechnik.

So können monomere Verbindungen der Formel II,

$$\text{Y-Spacer-M} \qquad \text{II}$$

worin M eine mesogene Gruppe der Formel Ia/b und Y eine zur Polymerisation befähigte funktionelle Gruppe bedeutet, polymerisiert werden, sofern Y eine in ω- oder (ω-1)-Stellung befindliche Alkenylgruppe mit 2 bis 5 C-Atomen bedeutet. Y kann mit dem Spacer über eine driekte Bindung oder über eine Gruppierung aus der Gruppe —O—, —S—, —SO—, —$SO_2$—, —CO—O—, —CO—NH—, —O—CO—NH— oder O—CO—O verbunden sein. Besonders bevorzugte Gruppierungen sind —O—, —CO—O—, —CO—NH— und —S—, insbesondere —O— und —CO—O—.

Die Polymerisation erfolgt in an sich bekannter Weise durch Einwirkung von Strahlungs-, Wärme- oder elektrischer Energie sowie durch Einwirkung radikalischer oder ionischer Katalysatoren wie z.B. beschrieben in Ocian, Principles of Polymerization, McGraw-Hill, New York. Als Strahlungsenergie eignen sich UV-, Laser-, Roentgen- und radioaktive Strahlen. Elektrische Energie kann beispielsweise durch Elektrolyseverfahren erzeugt werden. Beispiele für radikalische Katalysatoren sind Kaliumpersulfat, Dibenzoylperoxid, Azo-bisisobutyronitril, Di-tert-butylperoxid und Cyclohexanonperoxid. Ionische Katalysatoren sind alkali-organische Verbindungen wie Phenyllithium und Naphthalinnatrium oder

Lewissäuren wie $BF_3$, $AlCl_3$, $SnCl_4$ und $TiCl_4$ oder Metallkomplexe in Form von Aluminium- oder Titanverbindungen. Die Monomeren können in Lösung, Suspension, Emulsion oder Substanz polymerisiert werden.

Sofern Y eine Hydroxy-, Amino-, Mercapto-, Epoxid- oder Carboxygruppe oder einen ihrer reaktionsfähigen Abkömmlinge bedeutet, können die Verbindungen der Formel II auf ein polymeres Rückgrat aufgepfropft werden. Besonders bevorzugt bedeutet Y hierbei OH, $NH_2$, COOH oder einen reaktionsfähigen Abkömmling, insbesondere OH oder einen reaktionsfähigen Abkömmling der Carboxylgruppe. Diese Aufpfropfungsreaktion kann nach an sich bekannten Methoden, wie z.B. Veresterung, Amidierung, Umesterung, Umamidierung, Acetalisierung oder Veretherung erfolgen, die in der Literatur beschrieben sind [z.B. in Standardwerken wie Houben-Weyl, Methoden der Org. Chemie, Georg-Thieme-Verlag, Stuttgart oder C. M. Paleos et al., J. Polym. Sci. Polym. Chem. *19* (1981) 1427].

Eine bevorzugte Aufpfropfungsreaktion besteht in der Umsetzung mesogene Gruppen der Formel I a/b traender Monomere mit Organopolysiloxanen. Hierzu werden, wie z.B. in EP—PS 0060335 beschrieben, lineare oder cyclische Organowasserstoffpolysiloxane mit ethylenisch ungesättigten, mesogenen Monomeren der Formel II (Y bedeutet eine in ω- oder (ω-1)-Stellung befindliche Alkenylgruppe mit 2 bis 5 C-Atomen) in etwa äquimolaren Mengen, bezogen auf die Menge Siloxan-Wasserstoff, in Gegenwart eines die Addition von Silan-Wasserstoff an aliphatische Mehrfachbindungen fordernden Katalysators umgesetzt.

Als polymeres Rückgrat kommen prinzipiell alle Polymeren in Frage, deren Ketten eine gewisse Flexibilität aufweisen. Es kann sich hierbei um lineare, verzweigte oder cyclische Polymerketten handeln. Der Polymerisationsgrad beträgt normalerweise mindestens 10, vorzugsweise 20—100. Es kommen jedoch auch Oligomere, insbesondere cyclische Oligomere, mit 3 bis 15, insbesondere mit 4 bis 7 Monomereinheiten, in Frage.

Vorzugsweise werden Polymere mit C—C-Hauptketten, insbesondere Polyacrylate, -methacrylate, -α-halogenacrylate, -α-cyanacrylate, -acrylamide, -acrylnitrile oder -methylenmalonate eingesetzt. Weiterhin bevorzugt sind auch Polymere mit Heteroatomen in der Hauptkette, beispielsweise Polyether, -ester, -amide, -imide oder -urethane oder insbesondere Polysiloxane.

Entsprechende terminal funktionalisierte Verbindungen, d.h. Verbindungen, in denen mindestens eine der Seitengruppen am Sechsring in ω- oder (ω-1)-Stellung eine funktionelle Gruppe trägt, können nach an sich bekannten Methoden hergestellt werden, wie sie in der Literature (z.B. in den Standardwerken wie Houben-Weyl, Methoden der organischen Chemie, Georg-Thieme-Verlag, Stuttgart oder in DE—OS 33 32 955) beschrieben sind, und zwar unter Reaktionsbedingungen, die für die genannten Umsetzungen bekannt und geeignet sind. Dabei kann man auch von an sich bekannten, hier nicht näher erwähnten Varianten Gebrauch machen.

Bevorzugte Ausgangsmaterialien sind pentasubstituierte Halogenbenzole (M-Halogen), Pentahalogenbenzole [Y-spacer-$C_6$(Halogen$_5$)], worin Y gegebenenfalls durch eine Schutzgruppe blockiert sein kann, scyllo-Inosit-Derivate [Y-Spacer-$C_6H_5(OH)_5$], pentasubstituierte scyllo-Inosit-Derivate (M-OH; M=Ia), myo-Inosose, pentasubstituierte myo-Inosose-Derivate.

So lassen sich Verbindung der Formel IV

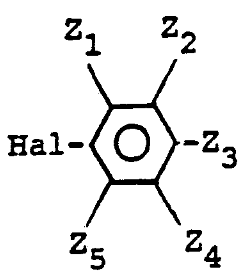

IV

worin

Hal F, Cl, Br oder I,

$Z_1$ bis $Z_5$ jeweils voneinander unabhängig H, OH oder SH bedeuten, wobei mindestens zwei der Substituenten $Z_1$ bis $Z_5$ von H verschieden sind,

durch Umsetzung mit Alkylhalogeniden oder — sulfonaten und eventueller anschließender Oxidation, oder mit Carbonsäuren oder Thiocarbonsäuren oder den reaktionsfähigen Derivaten von Carbon-, Thiocarbon-, Kohlen- oder Carbaminsäuren zu Verbindungen der Formel V umsetzen,

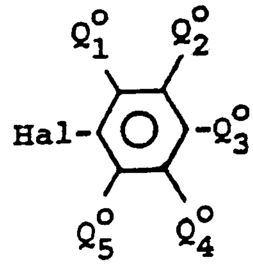

V

worin

Hal F, Cl, Br oder I

$Q_1^o$ bis $Q_5^o$ OR, SR, COR, OCO—OR, OCO—NHR, S—COR, SO—R oder $SO_2$—R bedeuten, worin R eine Alkylgruppe mit bis zu 14 C-Atomen bedeutet, wobei mindestens zwei der Substituenten $Q_1^o$ bis $Q_5^o$ von H verschieden sind.

Vorzugsweise ist Hal Cl oder Br und $Q_1^o$ bis $Q_5^o$ OR, SR, COR, SO—R oder $SO_2$—R, insbesondere OR, SR oder $SO_2R$.

Verbindungen der Formel VII,

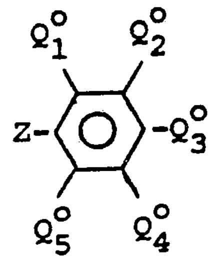

VII

worin

Z OH oder SH bedeuten und

$Q_1^o$ bis $Q_5^o$ die bei der Formel V angegebene Bedeutung besitzen und worin vorzugsweise $Q_1^o$ bis $Q_5^o$ OR, SR, COR, SO—R oder $SO_2R$, insbesondere OR, SR oder $SO_2R$ ist,

werden erhalten aus Verbindungen der Formel V oder der Formel VI,

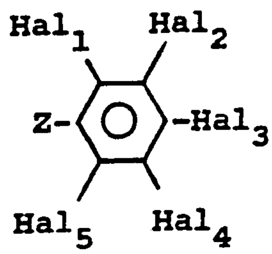

VI

worin

Z OH oder SH,

$Hal_1$ bis $Hal_5$ H, F, Cl, Br oder I bedeuten, wobei mindestens zwei der Substituenten $Hal_1$ bis $Hal_5$ von H verschieden sind und $Hal_1$ bis $Hal_5$ vorzugsweise Cl oder Br bedeuten,

durch Umsetzung mit Alkali- oder Erdalkalihydroxiden oder -hydrogensulfiden (im Falle der Verbindungen der Formel V), oder mit Alkoholen, Thiolen, Carbonsäuren oder Thiocarbonsäuren oder deren reaktionsfähigen Derivaten oder reaktionsfähigen Derivaten von Kohlen- und Carbaminsäure.

Verbindung der Formel VIII,

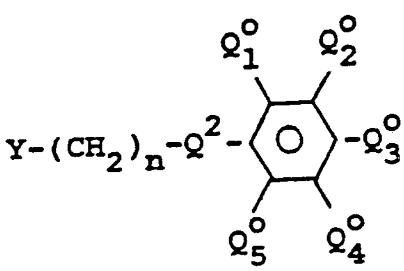

VIII

worin

$Q^2$ die in Formel III und

$Q^0_1$ bis $Q^0_5$ die in Formel V angegebene Bedeutung besitzen, und n 3 bis 20, vorzugsweise 10—15 ist, werden erhalten aus Verbindungen der Formel V oder VII durch Umsetzung mit Alkylhalogeniden oder -sulfonaten und gegebenenfalls anschließender Oxidation, oder mit Carbonsäuren oder Thiocarbonsäuren oder den reaktionsfähigen Derivaten von Carbon-, Thiocarbon-, Kohlen- oder Carbaminsäuren, wobei die terminale Gruppe Y gegebenenfalls mit einer geeigneten Schutzgruppe versehen ist und

Y die in Formel II angegebene Bedeutung besitzt.

Aus Verbindungen der allgemeinen Formel IX,

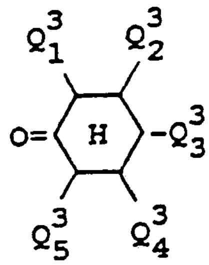

IX

worin

$Q^3_1$ bis $Q^3_5$ H, OH, SH, COOH oder $CH_2OH$ bedeuten, wobei mindestens zwei der Substituenten $Q^3_1$ bis $Q^3_5$ von H verschieden sind und $Q^1_1$ bis $Q^3_5$ vorzugsweise OH, SH oder COOH bedeuten, können durch chemische Umsetzung mit Alkylhalogeniden oder -sulfonaten und gegebenenfalls anschließender Oxidation, oder mit Carbonsäuren oder Thiocarbonsäuren oder den reaktionsfähigen Derivaten von Carbon-, Thiocarbon-, Kohlen- oder Carbaminsäuren.

Verbindungen der allgemeinen Formel X erhalten werden,

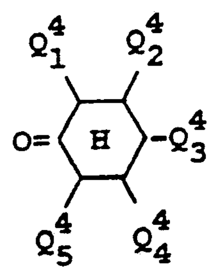

X

worin

$Q^4_1$ bis $Q^4_5$ OR, SR, SO—R, $SO_2$—R, OCO—R, SCO—R, COOR oder $CH_2OR$ bedeuten, worin R eine Alkylgruppe mit bis zu 14 C-Atomen bedeutet und wobei mindestens zwei der Substituenten $Q^4_1$ bis $Q^4_5$ von H verschieden sind, wobei $Q^4_1$ bis $Q^4_5$ vorzugsweise OR, SR, SO—R, $SO_2$—R oder COOR, insbesondere OR, SR und $SO_2$—R bedeuten.

Durch chemische Umsetzung mit Reduktions- oder Alkylierungsmitteln werden daraus Verbindungen der allgemeinen Formel XI erhalten

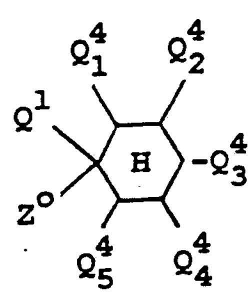

XI

worin

$Q^4_1$ bis $Q^4_5$ die in Formel X angegebene Bedeutung besitzen,

$Q^1$ H, Alkyl oder Alkoxy mit 1—5 C-Atomen, F, Cl, Br oder CN, und

$Z^0$ OH oder SH bedeuten und wobei $Q^1$ vorzugsweise H, Alkyl oder Alkoxy mit 1 bis 5 C-Atomen, F, Cl oder CN, insbesondere H, alkyl mit 1 bis 4 C-Atomen, F oder CN bedeutet und $Q^4_1$ bis $Q^4_5$ vorzugsweise OR, SR, SO—R, $SO_2$—R oder COOR, insbesondere OR, SR und $SO_2$—R bedeuten.

Aus Verbindungen de Formel X oder XI werden durch Umsetzung mit Alkylhalogeniden oder -sulfonaten und gegebenenfalls anschließender Oxidation, oder mit Carbonsäuren oder Thiocarbonsäuren oder den reaktionsfähigen Derivaten von Carbon-, Thiocarbon-, Kohlen- oder Carbaminsäuren, wobei die terminale Gruppe Y gegebenenfalls mit einer geeigneten Schutzgruppe versehen ist, Verbindungen der allgemeinen Formel XII erhalten,

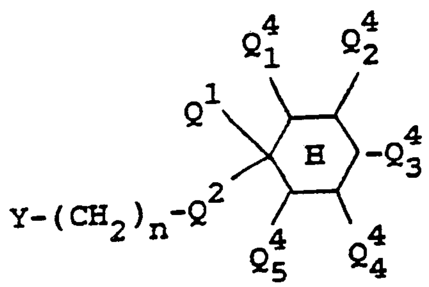

XII

worin

$Q_1^4$ bis $Q_5^4$ die in Formel X,

$Q^1$ die in Formel I,

$Q^2$ die in Formel III,

Y die in Formel II angegebene Bedeutung besitzen und

n 3—20, vorzugsweise 10—15 ist. $Q_1$ ist vorzugsweise H, Alkyl oder Alkoxy mit 1—5 C-Atomen, F, Cl oder CN, insbesondere H, Alkyl mit 1—4 C-Atomen, F oder CN, $Q^2$ ist vorzugsweise —CO—S—, —O—, —S—, —CO—O— —SO— oder —$SO_2$—, insbesondere —O—, —S—, —$SO_2$— oder —CO—O—. $Q_1^4$ bis $Q_5^4$ sind vorzugsweise identisch und bedeuten OR, SR, SO—R odr COOR, insbesondere OR, SR und $SO_2R$.

Die Zwischenprodukte V und VII, VIII, IX, X, XI und XII sind teilweise bekannt, größtenteils jedoch neu. Ihre Herstellung erfolgt nach an sich bekannten Methoden, wie sie in der Literatur (z.B. in Standardwerken wie Houben-Weyl, Methoden der Organischen Chemie, Georg-Thieme-Verlag, Stuttgart) beschrieben sind, und zwar unter Reaktionsbedingungen, die für die genannten Umsetzungen bekannt und geeignet sind. Dabei kann man auch von an sich bekannten, hier nicht näher erwähnten Varianten Gebrauch machen. Sie dienen zur Herstellung der erfindungsgemäßen flüssigkristallinen Polymerzusammensetzung.

Die bei der Herstellung von V bis XII angegebenen Verfahren sind an sich bekannt (z.B. aus Standardwerken wie Houben-Weyl, Methoden der Org. Chemie, Georg-Thieme-Verlag, Stuttgart). Normalerweise werden die für die genannten Umsetzungen bekannten Reaktionsbedingungen eingehalten. Man kann jedoch auch von an sich bekannten, hier nicht näher erwähnten Varianten Gebrauch machen.

Die Ausgangsmaterialien IV, VI und IX sind teilweise bekannt (Beilstein *6* IV 1069, 7920). Alle Verbindungen IV, VI und IX sind nach an sich bekannten Verfahren herstellbar.

Die niedermolekularen Verbindungen der Formel II weisen teilweise breite diskotische Phasenbereiche auf. Verbindungen der Formel II, die keine Mesophasen aufweisen, sind jedoch auch zur Herstellung der erfindungsgemäßen Polymerzusammensetzungen geeignet.

Die Herstellung von Homo- oder Copolymeren aus den polymerisationsfähigen Verbindungen der Formel III oder deren polymerisationsfähigen Derivaten erfolgt vorzugsweise durch radikalische Polymerisation. Die Reaktion wird beispielsweise durch UV-Bestrahlung oder Radikalbildner gestartet. Die Monomeren können in Lösung oder in Substanz polymerisiert werden.

Erfindungsgemäße flüssigkristalline Phasen aufweisende Copolymerzusammensetzungen werden durch Copolymerisation von polymerisationsfähigen Verbindungen der Formel II oder deren polymerisationsfähigen Derivaten mit Monomeren erhalten, die keine mesogenen Reste Tragen, die andere mesogene Reste (z.B. rod-like) tragen, die chirale Reste (z.B. DE—OS 28 31 909) tragen oder die Farbstoffreste (DE—OS 32 11 400) tragen.

Die Copolymerisation mit solchen Monomeren führt, ausgehend von einer Monomerenmischung mit der Konzentration $X_1$, nur dann zu einem Copolymerisat mit dem Einbauverhältnis entsprechend der Monomerkonzentration $X_1$, wenn die Copolymerisationsparameter der Monomerkomponenten von vergleichbarer Größenordnung sind. Das ist besonders dann von Bedeutung, wenn problemlos, z.B. ohne Berücksichtigung der Reaktionskinetik, ein Copolymer bestimmter Zusammensetzung hergestellt werden soll. Deshalb wählt man vorzugsweise Monomerkomponenten, die vergleichbare Copolymerisationsparameter aufweisen, nämlich Acrylsäure- oder Methacrylsäurealkylester, die sich in erster Linie durch den Substituenten der alkylkette unterscheiden.

Die Copolymerisation mit Monomeren, die keinen mesogenen Rest tragen, führt im allgeinen zu einer Erniedrigung der Glastemperatur und des Klärpunktes. Durch geeignete Auswahl des Spacers ist es oftmals möglich, den Mesophasenbereich in den für den jeweiligen Anwendungszweck geeigneten Temperaturbereich zu bringen.

Als Monomere mit chiralem Rest können prinzipiell alle derartigen Verbindungen mit asymetrischen C-Atomen verwendet werden. Vorzugsweise werden jedoch Verbindungen der Formel II oder deren polymerisationsfähige Derivate eingesetzt, in denen M eine mesogene Gruppe der Formel Ia oder Ib

bedeutet, worin einer der Reste $X^1$ bis $X^5$ oder gegebenenfalls $Q^1$ eine Alkylgruppe bedeutet, worin eine $CH_2$-Gruppe durch $—CHCH_3—$ ersetzt ist.

Schließlich ergeben sich zahlreiche weitere Variationsmöglichkeiten wegen des Umstandes, daß die erfindungsgemäßen Verbindungen flüssigkristalline Eigenschaften mit typischen Polymereinigenschaften, wie Fähigkeit zur Schicht-, Folien- und Faserbildung, liechte Verformbarkeit usw., vereinigen. Diese Eigenschaften können in an sich bekannter Weise durch Copolymerisation oder Vermischen mit weiteren Komponenten, durch Variation der Molekulargewichte, durch Zusätze der verschiedensten anorganischen oder organischen Additive und Metalle und durch viele weitere, dem Polymerfachmann geläufige Behandlungen modifiziert werden.

Die erfindungsgemäßen Polymerzusammensetzungen lassen sich als Ausgangsmaterial zur Herstellung von organischen Gläsern mit in breiten Bereichen modifizierbaren anisotropen Eigenschaften verwenden.

Derartige Anwendungen ergeben sich beispielsweise auf dem Sektor von Licht- und Sonnenkollektoren oder bei organischen phototropen gläsern. Ein wichtiges Anwendungsfeld eröffnet sich ferner auf dem Gebiet der optischen Speicher.

Weitere Anwendungsmöglichkeiten erschließen sich auf dem Gebiet der magnetischen Speicher. Insbesondere eignen sich die erfindungsgemäßen Zusammensetzungen auch als Matrix für Substanzen mit nicht linear optischen Eigenschaften zur Herstellung von "non linear"-optischen Bauelementen.

Zur Erläuterung der Erfindung dienen folgende Beispiele:

Beispiel 1

1a. 1,1 Mol Pentachlorphenol, 1 Mol 1-Brom-n-decanol-10, 1 Mol NaH und 3 l Tetrahydrofuran werden 48 h refluxiert; es scheidet sich Natriumchlorid aus. Nach Filtration wird das Lösungsmittel abgezogen, der Rückstand 2 mal mit 5%iger Natronlauge, 1 mal mit ges. Kochsalzlösung und nachfolgend mit Wasser gewaschen. Zurück bleibt ein zähes Öl:

$^1H$-NMR ($CD_3SOCD_3$):

$\delta$ = 3,31 (t, 2H), 3,24 (t, 2H), 2,60—2,71 (S, 1H), 1,21—1,94 (m, 6H).

1b. Zu der Lösung von 3 mMol Pentachlorverbindung 1a und 50 mMol 1-Mercaptotridecan in 150 ml 1,3-Dimethylimidazolidinon fügt man 50 mMol NaH hinzu und erwärmt nach Abklinen der Wasserstoffentwickloung 2 Std. unter Stickstoff auf 100°. Zur Aufarbeitung wird mit 500 ml Wasser versetzst und 3× mit je 200 ml Ether ausgezogen. Die mit Wasser gewaschenen Etherauszüge hinterlasen nach Trocknen und Eindampfen in 65% Ausbeute ein hellgelbes Wachs.

IR: $V_{OH}$ 3620 $cm^{-1}$.

1c. in 1b erhaltener Pentakisthioether (0,1 Mol) wird in 500 ml Dichlormethan gelöst und unter Rühren mit der Lösung von 200 g 3-Chlorperbenzoesäure in 1 l Dichlormethan langsam versetzt. Der nach 2-stündigem Rühren bei Raumtemperatur ausgefallene Niederschlag wird abgesaugt und getrocknet. Ausbeute: 86% eines amorphen Feststoffes.

IR (KBr): $V_{OH}$ 3624 $cm^{-1}$

$V_{SO_2}$ 115 u. 1325 $cm^{-1}$.

1d. Zu der Lösung von 0,5 Mol Alkohol 1c in 350 ml abs. Dichlormethan u. 0,5 Mol Triethylamin tropft man unter Kühlen mit Eiswasser 0,5 Mol Methacryloylchlorid derart zu, daß die Innentemperatur +5°C nicht überschreitet. Nach beendeter Zugabe wird noch 1 Std. bei Raumtemperatur nachgerührt; ausgefallenes Triethylammoniumchlorid wird abgesaugt und das Filtrat mit Wasser gewaschen und getrocknet. Nach Abziehen des Lösungsmittels im Vakuum hinterbleiben 88% d.Th. eines gelben Öls.

IR: $V_{C=O}$ 1725 $cm^{-1}$.

1e. 0,25 Mol in 1d erhaltener Methacrylsäure-10-[pentakis(tridecylsulfonyl)phenoxy]decylester und 0,2 Mol Poly(methylsiloxan) (mittl. Polymerisationsgrad ca. 35) werden in 50 ml tr. Benzol gelöst. Unter Durchleiten von Stickstoff fügt man 1 mg eines Dicyclopentadienylplatindichloridkatalysators hinzu und hält 6 Std. bei 80°C. Anschließend wird durch Zugabe von Ethanol das Polymere ausgefällt.

Beispiel 2

2a. 0,2 Mol 9-Mercaptoundec-1-en werden in 100 ml. Hexamethylphosphortriamid gelöst und unter Rühren mit 0,2 Mol Natriumhydrid versetzt. Nach Abklingen der $H_2$-Endwicklung fügt man 0,1 Mol Pentakis(tridecylthio)-chlorbenzol zu und rührt 3 Std. bei 100°. Anschließend wird auf 500 ml Wasser gegossen, mit 3 × 150 ml Ether extrahiert, die vereinigten Extrakte mit Wasser gewaschen und getrocknet. Nach Entfernen des Lösungsmittels im Vakuum hinterbleiben 66% Th, eines dunklen Öls, das ohne Reinigung weiter umgesetzt wird.

2b. Zu der Lösung von 0,1 Mol Olefin 2a in 250 ml abs. THF tropft man bei 0° 0,12 Mol einer Lösung von Diboran in THF. Nach beendeter Zugabe wird noch 1 Std. bei Raumtemperatur weitergerührt.

Anschließend fügt man 30 ml einer 3 M Natronlauge zu, gefolgt von der tropfenweise Zugabe von 36 ml einer 30%igen Wasserstoffperoxidlösung. Es wird noch 1 Std. bei 25—30° gerührt und der gebildete Alkohol mittels Etherextraktion isoliert.

Ausbeute: 93% d.Th. helles Öl;

IR: $V_{OH}$ 3630 $cm^{-1}$.

2c. Die Lösung von 0,1 Mol des in 2b erhaltenen Hexasulfids in 300 ml Eisessig wird mit 10 ml 85% Wasserstoffperoxid versetzt und über Nacht bei Raumtemperatur gerührt. Den ausgefallenen Niederschlag saugt man unter Nachwaschen mit Ether ab und trocknet. So werden 81% d.Th. eines gelben amorphen Hexasulfons erhalten.

IR (KBr): $V_{OH}$ 3620 $cm^{-1}$, $V_{SO_2}$ 1150 u. 1325 $cm^{-1}$.

2d. 0,1 Mol (11-Hydroxyundecylsulfonyl)-pentakis(tridecylsulfonyl)benzol 2c werden in 150 ml abs. Dichlormethan und 0,1 Mol Triethylamin gelöst und bei $\leqq +5°$ mit 0,1 Mol Methacryloylchlorid versetzt. Anschließend rührt man noch 2 Std. bei 20°, wäscht mit Wasser gut aus, trocknet und dampft im Vakuum zum Rückstand ein.

Der amorphe Festoff zeigt im IR(KBr) Absorptionen für die Sulfonylgruppe ($V_{SO}$ 1155 u. 1325 $cm^{-1}$) und Carbonylgruppe ($V_{CO}$ 1730 $cm^{2-1}$).

2e. Die Lösung von 0,1 Mol Methacrylsäure-11-{[pentakis(tridecylsulfonyl)]phenylsulfonyl}undecylester 2d in 300 ml Tetrahydrofuran wird unter Stickstoff 4 Std. mit einer Quecksilberhochdrucktauchlampe bestrahlt. Durch Zugabe von Methanol kann das Polymere als opake Masse ausgefällt werden.

Beispiel 3

Lösungen von Pentamethylcyclopentasiloxan (0,1 Mol) und Undec-10-enylthio-pentakis(tridecylthio)-benzol (1 Mol) in THF werden unter Zusatz von 0,1 g Hexachlorplatin(IV)-säure bei 60° vereinigt und 12 Std. bei dieser Temperatur gerührt. Nach Abziehen des Lösungsmittels und Trocknen im Hochvakuum werden 90% d.Th. eines amorphen Feststoffes erhalten.

$IR_{Si-O}$ 1050 $cm^{-1}$.

Zur Oxidation wird das oben erhaltene Polysulfid in Eisessig gelöst und mit überschüssigem 85%igem Wasserstoffperoxid behandelt. Das in Eisessig unlösliche Sulfon zeigt im IR (KBr) für die Sulfonylgruppen Banden bei 1160 und 1330 $cm^{-1}$.

Beispiel 4

4a. Die Suspension von 0,1 Mol Pentahydroxycyclohexanon, 0,1 Mol 1-Bromundecan und 0,1 Mol Cesiumcarbonat in 300 ml DMF wird 3 Std. bei 100°C gerührt. Anschließend gießt man auf 3 l Eiswasser und extrahiert 4× mit je 250 mit je 250 ml Dichlormethan. Die vereinigten Extrakte werden mit Wasser gewaschen und getrocknet. Durch Eindampfen im Vakuum erhält man 67% d.Th. öliges Produkt.

IR: $V_{C=O}$ 1715 $cm^{-1}$.

4b. Eine aus 0,1 Mol Methyliodid und 0,1 Grammatomen Magnesium in 150 ml Ether bereitete Losung von Methylmagnesiumiodid läßt man langsam zu der gerührten Lösung von 0,1 Mol Cyclohexan 4a in 100 ml Ether tropfen. Zur Vervollständigung der Reaktion wird anschließend noch 1 Std. zum Rückfluß erhitzt. Man zersetzt das Reaktionsgemisch durch Zugabe von 200 ml ges. Ammoniumchloridlösung, trennt die organische Phase ab und extrahiert noch 2× mit je 150 ml Ether. Nach Waschen mit Wasser und Trocknen über Natriumsulfat werden nach Abdestillieren des Lösungsmittels 73% d.Th. eines nahezu farblosen Öls erhalten:

IR: $V_{OH}$ 3615 $cm^{-1}$.

4c. In die Lösung von 0,2 Mol des tert. Alkohol aus 4b und 0,2 Mol Dicyclohexylcarbodiimid in 400 ml Dichlormethan tropft man bei 5—10°C die Lösung von 0,2 Mol Undec-10-ensäure in 100 ml Dichlormethan. Nach 2 Std. Rühren bei 20° wird der ausgefallene Dicyclohexylharnstoff abgesaugt und das Filtrat zum Rückstand eingeengt.

IR: $V_{CO}$ 1745 $cm^{-1}$.

4d. Die Lösung von 0,1 Mol ungesättigtem Ester 4c in 200 ml Ether wird bei 20° langsam mit 50 ml 40%iger Peressigsäure versetzt. Man läßt 20 Stdn. stehen, gießt dann in eine gesättigte wäßrige Kaliumcarbonatlösung, trennt die Etherschicht ab und trocknet mit Natriumsulfat. Nach dem schonenden Entfernen des Lösungsmittels im Vakuum hinterbleibt das Epoxid als instabiles Öl.

4e. Nach 4d erhaltener ungesättigter Ester (0,1 Mol) wird in 200 ml Diglyme gelöst und bei einer Temperatur von $\leqq +5°$ mit 0,12 Mol einer Lösung von Diboran in THF versetzt. Anschließend rührt man noch 2 Std. bei RT nach, fügt 30 ml einer 3 M Natronlauge zu, gefolgt von 36 ml einer 30%igen Wasserstoffperoxidlösung. Man rührt noch 2 Std. bei 20°, versetzt mit 500 ml Eiswasser und extrahiert 3× mit 200 ml Dichlormethan. Die vereinigten organischen Phasen werden mit Natriumsulfat getrocknet. Nach Filtration

vom Trockenmittel werden 0,1 Mol Triethylamin zugesetzt und bei 0—5°C mit 0,1 Mol Acryloylchlorid versetzt. 2 Std. Nachrühren bei 20°, Waschen mit Eiswasser und Trocknen führt nach Abziehen des Lösungsmittels zu 68% d.Th. öligem ungesättgtem Ester.

IR: $V_{C=O}$ 1720 $cm^{-1}$.

4f. Die Lösung von 0,05 Mol Acrylasäure-10-{[2,4,6c-3,5t-pentakis(undecyloxy)-1t-methyl]cyclohexyl-1r-oxycarbonyl}decylester in 100 ml Toluol wird nach Zusatz von 0,5 g Azobis(isobutyronitril) 12 Std. auf 90° erwärmt. Beim Abkühlen scheidet sich das Polymerprodukt gelartig aus. Zugabe von Ethanol führt zu einem filtrierbaren amorphen Produkt.

Beispiel 5

5a. Zu der Suspension von 0,5 Mol Natriumhydrid in 1 l THF tropft man die Lösung von 0,1 Mol myo-Inosit in 500 ml des gleichen Lösungsmittels. Nach beendeter Wasserstoffentwicklung wird mit 0,5 Mol 1-Brom-heptan versetzt. Es wird 10 Std. bei 50°C gerührt, von ausgeschiedenem Natriumbromid abfiltriert und das Filtrat zum Rückstand eingedampft. Umlösen aus Diisopropylether liefert 81% d.Th. reines Produkt als amorphen Feststoff.

IR: $V_{OH}$ 3615 $cm^{-1}$.

5b. Die Lösung von 0,5 Mol 2,4,6c-3,5t-Pentakisheptyloxycyclohexan-1r-ol in 1 l Dichlormethan u. 0,5 Mol Triethylamin wird portionsweise mit 0,5 Mol Toluolsulfonylchlorid versetzt. Nach beendedter Reaktion wird mehrmals mit Wasser gewaschen, getrocknet und eingedampft. Das zurückbleibende instabile Tosylat wird rasch weiter umgesetzt, indem seine Lösung in 1,2 l DMF und 1 Mol Kaliumethylthioxanthogenat bei 60°C 4 Std. gerührt wird. Anschließend wird auf 4 l Eiswasser gegossen, 3× mit je 1 l Ether extrahiert und über Magnesiumsulfat getrocknet. Nach Entfernen des Lösungsmittels wird das zurückgebliebene, ölige Xanthogenat mit 2 l konz. Ammoniaklösung 2 Std. zum Rückfluß erhitzt. Man läßt erkalten, extrahiert das ausgeschiedene Öl mit Ether und erhält nach dessen Abziehen in 64% d.Th. (bez. auf Cyclohexanol 5a) das gewünschte Mercaptan als gelbes, zähes Öl.

IR: $V_{SH}$ 2565 $cm^{-1}$.

5c. Zu der Lösung von 0,1 Mol Mercaptan 5b in 350 ml THF und 0,1 Mol Triethylamin tropft man bei 20° 0,1 Mol 11-Bromundecanol. Nachdem 4 Std. bei dieser Temperatur weitergerührt worden ist, saugt man von ausgefallenem Triethylammoniumbromid ab und engt das Filtrat zum Rückstand ein. Ausbeute 92% d.Th.

IR: $V_{OH}$ 3515 $cm^{-1}$.

5d. 0,2 Mol des vorstehend erhaltenen Alkohols 5c werden in 500 ml Dichlormethan und 0,2 Mol Triethylamin gelöst. Bei +5° tropft man 0,2 Mol Methacryloylchlorid zu, hält noch 30 Min bei dieser Temperatur und rührt anschließend 1 Std. bei Raumtemperatur. Es wird mit Wasser neutral gewaschen, getrocknet und in Vakuum schonend vom Lösungsmittel befreit. Es bleiben 78% d.Th. eines nahezu farblosen Öls zurück.

IR: $V_{C=O}$ 1725 $cm^{-1}$.

5e. Analog zu Beispiel 1e wird aus Methacrylsäure-11-{[2,4,6c-3,5t-pentakis(heptyloxy)]cyclohex-1r-ylthio}undecylester 5d mit Poly(methylsiloxan-codimethylsiloxan) ein glasartiges Polymer erhalten.

Beispiel 6

6a. 0,1 Mol scyllo-Inosit in 250 ml Dichlormethan und 0,6 Mol Triethylamin werden portionsweise mit 0,6 Mol Tosylchlorid versetzt. Man läßt 2 Std. bei Raumtemperatur nachrühren, wäscht mit Eiswasser gut aus und trocknet über Natriumsulfat.

Das nach dem schonenden Abdampfen des Lösungsmittels im Vakuum erhaltene Tosylat wird in 800 ml DMSO aufgenommen, mit 1 Mol Kaliumethylthioxanthogenat versetzt und 6 Stdn. bei 65°C gerührt. Man läßt auf Raumtemperatur abjühlen und gibt unter gleichzeitigem Durchleiten von Stickstoff durch das Reaktionsgemisch 500 ml konz. Ammoniaklösung zu. Man erhitzt darauf auf ca. 80°C, verdünnt nach 4 Std. mit Eiswasser auf 5 l und schüttelt mehrmals mit Ether aus. Die mit Wasser gewaschenen und getrockneten Etherphasen hinterlassen nach dem Eindampfen 760% d.Th. eines gelben Öls.

IR: $V_{SH}$ 1560 $cm^{-1}$.

6b. Das Gemisch aus 0,3 Mol (1,3,5c-2,4,6t)-Hexamercaptocyclohexan 6a, 0,3 Mol 11-Bromundecanol, 500 ml DMF und 0,15 Mol Kaliumcarbonat wird 2 Stdn. bei 50°C gerührt.

Anschließend wird im Vakuum das Lösungsmittel entfernt, der Rückstand mit 1 l Wasser versetzt und mehrmals mit Ether ausgezogen. Nach Abdampfen des Ethers bleiben 94% d.Th. Alkohol zurück.

IR: $V_{OH}$ 3620 $cm^{-1}$, $V_{SO}$ 2550 $cm^{-1}$.

6c. 0,1 Mol der obigen Pentamercaptoverbindung 6b in 200 ml Ethanol werden nach Zusatz von 0,5 Mol Natriumhydroxid und 0,5 Mol 1-Bromheptan 10 Std. unter Stickstoff zum Rückfluß erhitzt. Nach Abkühlen,

auf Raumtemperatur wird von ausgeschiedenem Natriumbromid abfiltriert und das Filtrat zum Rückstand eingeengt. Den Rückstand nimmt man in Ether auf, filtriert erneut und dampft ein. Es wurden so 86% d.Th. eines dunkelgelben Öls erhalten.

IR: $V_{OH}$ 3625 $cm^{-1}$.

6d. Man kocht 0,2 Mol des Polythioethers 6c mit einem 20%igen Überschuß an 85%iger 3-Chlorperbenzoesäure in 150 ml Chloroform 36 Std. Nach Abkühlen wird mit Sodalösung säurefrei gewaschen, getrocknet und eingedampft. Es bleiben 96% d.Th. eines amorphen Feststoffes zurück.

IR: $V_{OH}$ 3625 $cm^{-1}$, $V_{SO_2}$ 1150 u. 1320 $cm^{-1}$.

6e. 0,1 Mol von Sulfonalkohol 6d, 0,1 Mol Methacryloylchlorid u. 200 ml Trifluoressigsäure werden 3 Std. bei 20° gerührt. Nach Eindampfen werden 89% d.Th. öliger Ester erhalten.

IR: $V_{SO_2}$ 1150 u. 1320 $cm^{-1}$, $V_{C=O}$ 1720 $cm^{-1}$.

6f. Die Lösung von 0,5 Mol Methacrylsäure-10-{[pentakis(heptylsulfonyl)-cyclohex-1r-yl]sulfonyl}-decylester und 0,45 Mol Poly(methylsiloxan) in 300 ml Tetrahydrofuran wird nach Zusatz von 0,01 Mol Azobis(isobutyronitril) unter Stickstoff 10 Stdn. zum Rückfluß erhitzt. Zusatz von Methanol fällt das Polymere aus.

Beispiel 7

7a. 0,5 Mol Hexakis(2-hydroxyethyl)benzol, 0,5 Mol 11-Bromundecanoylchlorid u. 700 ml Trifluoressigsäure werden 2 Stdn. bei Raumtemperatur gerührt. Nach Eindampfen u. üblicher Aufarbeitung erhält man 92% d.Th. Monoester als farbloses Öl.

IR: $V_{OH}$ 3475 $cm^{-1}$, $V_{CH}$ 1745 $cm^{-1}$.

7b. 0,4 Mol der Pentakis(hydroxyethyl)verb. 7a, 2 Mol Pentanoylchlorid und 500 ml Trifluoressigsäure werden 3 Std. bei Raumtemperatur gerührt. Nach Abdestillieren des Lösungsmittels erhält man 95% d.Th. des Hexaesters als Öl.

IR: $V_{C=O}$ 1740 $cm^{-1}$.

7c. Bei 70° tropft man zu dem Gemisch aus 0,1 Mol Hexaester 7b, 0,1 Mol Kaliumcarbonat u. 200 ml DMF langsam 0,1 Mol Methacryloylchlorid. Nach 6 Stdn. Reaktionsdauer wird erkalten gelassen, mit 1 l Eiswasser versetzt und mehrmals mit Ether ausgezogen. Die vereinigten Etherphasen liefern nach Eindampfen 68% d.Th. öliges Methacrylat.

IR: $V_{C=O}$ 1725 u. 1745 $cm^{-1}$.

7d. Analog zu Beispiel 2e wird aus Methacrylsäure-10-{[pentakis-(2-pentanoyloxyethyl)phenyl]ethoxycarbonyl}decylester und Poly(methylsiloxan-co-dimethylsiloxan) ein glasartiges Polymeres erhalten.

Beispiel 8

8a. 0,1 Mol (2,4,6c-3,5t)-Pentakis(nonyloxy)cyclohexanon, gelöst in 200 ml abs. Ether werden mit 0,1 Mol einer etherischen Lösung von (R)-2-Methyl-butylmagnesiumbromid behandelt. Nach beendeter Zugabe wird noch 30 Min zum Rückfluß erhitzt. Man läßt abkühlen und zersetzt durch Zugabe von konz. Ammoniumchloridlösung. Die organische Phase wird abgetrennt, mit Wasser gewaschen und getrocknet. Nach Entfernen des Lösungsmittels werden 79% d.Th. eines zähen Öls erhalten.

IR: $V_{OH}$ 3635 $cm^{-1}$.

8b. Die Lösung von 0,2 Mol Alkohol 8a in 150 ml abs. Pyridin wird bei 0—5° mit 0,1 Mol 11-Hydroxyundecanoylchlorid behandelt. Nach 2 Stdn. Rühren bei dieser Temperatur gießt man auf 1 kg Eis und isoliert das Reaktionsprodukt durch Extraktion mit Ether. Nach Entfernen des Lösungsmittels af dem Wasserbad erhält man 78% d.Th. Ester als helles Öl.

IR: $V_{CH}$ 1740 $cm^{-1}$.

8c. 0,1 Mol des vorstehenden Alkohols 8b in 250 ml Dichlormethan und 0,1 Mol Triethylamin werden bei 0—5°C mit 0,1 Mol Methacryloylchlorid behandelt. Nach 2 Stdn. Rühren bei dieser Temperatur wäscht man mit Eiswasser neutral, trocknet über Natriumsulfat und dampft ein. Zurück bleiben 81% d.Th. eines gelben, viskosen Öls.

IR: $V_{C=O}$ 1715 u. 1740 $cm^{-1}$.

8d. Analog zu Beispiel 3 wird aus Acrylsäure-10-{[1t-((R)-2-methylbutyl)-2,4,6c-3,5-pentakis-(nonyloxy)-cyclohex-1r-yl]oxycarbonyl}-decylester 8c und Poly(methylsiloxan) unter Zusatz von Hexachlorplatin(IV)-säure ein glasartiges Polymer erhalten.

**Patentansprüche für die Vertragsstaaten: CH DE FR GB IT LI**

1. Flüssigkristalline Phasen aufweisende Polymerzusammensetzungen, die — gegebenenfalls mit Hilfe eines Spacers — chemisch gebundene mesogene Gruppen enthalten, dadurch gekennzeichnet, daß diese mesogenen Gruppen der Formel Ia entsprechen:

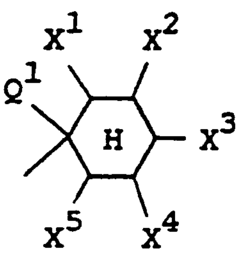

Ia

worin

$Q^1$ H, Alkyl oder Alkoxy mit 1—5 C-Atomen, F, Cl, Br oder CN,

$X^1$ bis $X^5$ jeweils unabhängig voneinander H oder eine Alkylgruppe mit bis zu 15 C-Atomen bedeuten, worin auch eine oder zwei nicht benachbarte $CH_2$-Gruppen durch eine Gruppierung aus der Gruppe —O—, —S—, —O—CO—O—, —O—CO—NHR—, —CO—, —CO—O—, —CO—S—, —S—CO—, —SO— und —$SO_2$— ersetzt sein können,

wobei mindestens zwei der Substituenten $X^1$ bis $X^5$ von H verschieden sind.

2. Flüssigkristalline Phasen aufweisende Polymerzusammensetzungen, die — gegebenenfalls mit Hilfe eines Spacers — chemisch gebundene mesogene Gruppen enthalten, dadurch gekennzeichnet, daß diese mesogenen Gruppen der Formel Ia und IB entsprechen:

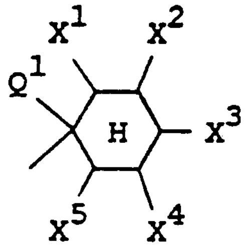

Ia

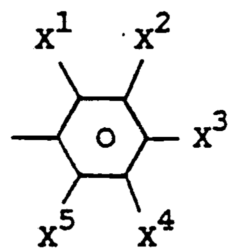

Ib

worin

$Q^1$ H, Alkyl oder Alkoxy mit 1—5 C-Atomen, F, Cl, Br oder CN,

$X^1$ bis $X^5$ jeweils unabhängig voneinander H oder eine Alkylgruppe mit bis zu 15 C-Atomen bedeuten, worin auch eine oder zwei nicht benachbarte $CH_2$-Gruppen durch eine Gruppierung aus der Gruppe —O—, —S—, —O—CO—O—, —O—CO—NHR—, —CO—, —CO—O—, —CO—S—, —S—CO—, —SO— und —$SO_2$— ersetzt sein können,

wobei mindestens zwei der Substituenten $X^1$ bis $X^5$ von H verschieden sind.

3. Flüssigkristalline Phasen aufweisende Polymerzusammensetzungen, die — gegebenenfalls mit Hilfe eines Spacers — chemisch gebundene mesogene Gruppen enthalten, dadurch gekennzeichnet, daß diese mesogenen Gruppen der Formel Ib entsprechen:

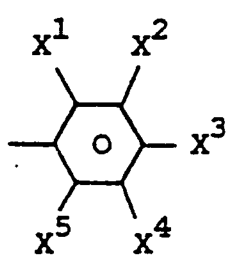

Ib

worin

$X^1$ bis $X^5$ jeweils unabhängig voneinander H oder eine Alkylgruppe mit bis zu 15 C-Atomen bedeuten, worin auch eine oder zwei nicht benachbarte $CH_2$-Gruppen durch eine Gruppierung aus der Gruppe —O—, —S—, —O—CO—O—, —O—CO—NHR—, —CO—, —CO—O—, —CO—S—, —S—CO—, —SO— und —$SO_2$—

ersetzt sein können,
wobei mindestens zwei der Substituenten $X^1$ bis $X^5$ von H verschieden sind und wobei mindestens einer der Substituenten $X^1$ bis $X^5$ H ist.

4. Polymerzusammensetzungen nach Anspruch 3, dadurch gekennzeichnet, daß die Substituenten $X^1$, $X^3$ und $X^5$ von H verschieden sind.

5. Verfahren zur Herstellung von Polymerzusammensetzungen nach Anspruch 1, 2, 3 oder 4, dadurch gekennzeichnet, daß man Verbindungen der Formel II,

Y-Spacer-M II

worin M eine mesogene Gruppe der Formel Ia/b und Y eine zur Polymerisation oder Aufpfropfung befähigte funktionelle Gruppe bedeutet, polymerisiert,
sofern Y eine in ω- oder (ω-1)-Stellung befindliche Alkenylgruppe mit 2 bis 5 C-Atomen bedeutet, oder auf Polymere aufpfropft,
sofern Y eine Hydroxyl-, Amino-, Mercapto-, Epoxid- oder Carboxygruppe bedeutet.

6. Verwendung von Polymerzusammensetzungen nach Anspruch 1, 2, 3 oder 4, organische Substrate in der Elektronik für die Faser- und Folientechnik.

**Patentansprüche für die Vertragsstaaten: NL SE**

1. Flüssigkristalline Phasen aufweisende Polymerzusammensetzungen, die — gegebenenfalls mit Hilfe eines Spacers — chemisch gebundene mesogene Gruppen enthalten, dadurch gekennzeichnet, daß diese mesogenen Gruppen der Formel Ia und/oder Ib entsprechen:

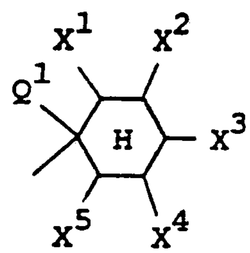
Ia

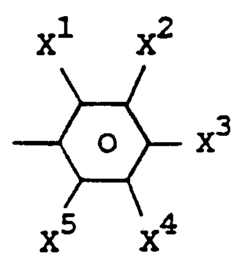
Ib

worin
$Q^1$ H, Alkyl oder Alkoxy mit 1—5 C-Atomen, F, Cl, Br oder CN,
$X^1$ bis $X^5$ jeweils unabhängig voneinander H oder eine Alkylgruppe mit bis zu 15 C-Atomen bedeuten, worin auch eine oder zwei nicht benachbarte $CH_2$-Gruppen durch eine Gruppierung aus der Gruppe —O—, —S—, —O—CO—O—, —O—CO—NHR—, —CO—, —CO—O—, —CO—S—, —S—CO—, —SO— und —$SO_2$— ersetzt sein können,
wobei mindestens zwei der Substituenten $X^1$ bis $X^5$ von H verschieden sind.

2. Verfahren zur Herstellung von Polymerzusammensetzungen nach Anspruch 1, dadurch gekennzeichnet, daß man Verbindungen der Formel II,

Y-Spacer-M II

worin M eine mesogene Gruppe der Formel Ia/b und Y eine zur Polymerisation oder Aufpfropfung befähigte funktionelle Gruppe bedeutet, polymerisiert,
sofern Y eine in ω- oder (ω-1)-Stellung befindliche Alkenylgruppe mit 2 bis 5 C-Atomen bedeutet, oder auf Polymere aufpfropft,
sofern Y eine Hydroxyl-, Amino-, Mercapto-, Epoxid- oder Carboxygruppe bedeutet.

3. Verwendung von Polymerzusammensetzungen nach Anspruch 1, organische Substrate in der Elektronik für die Faser- und Folientechnik.

**Revendications pour les Etats contractants: CH DE FR GB IT LI**

1. Compositions polymères présentant des phases à cristaux liquides, qui contiennent des groupes mésogènes liés chimiquement — éventuellement par l'intermédiaire d'un groupe de liaison — caractérisées en ce que ces groupes mésogènes répondent à la formule Ia:

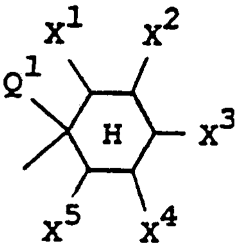

Ia

dans laquelle:

$Q^1$ représente H, un groupe alkyle ou alcoxy en $C_1$—$C_5$, F, Cl, Br ou CN,

$X^1$ à $X^5$ représentent chacun, indépendamment les uns des autres, H ou un groupe alkyle contenant jusqu'à 15 atoms de carbone et dans lequel un ou deux groupes $CH_2$ non voisins peuvent être remplacés par un groupement choisi parmi —O—, —S—, —O—CO—O—, —O—CO—NHR—, —CO—, —CO—O—, —CO—S—, —S—CO—, —SO— et —$SO_2$—,

deux aux moins des symboles $X^1$ à $X^5$ ayant des significations autres que H.

2. Compositions polymeres présentant des phases à cristaux liquides, qui contiennent des groupes mésogènes liés chimiquement — éventuellement par l'intermédiaire d'un groupe de liaison — caractérisées en ce que ces groupes mésogènes répondent à la formule Ia et Ib

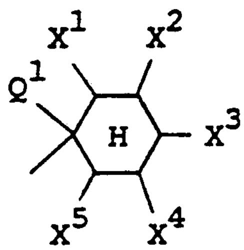

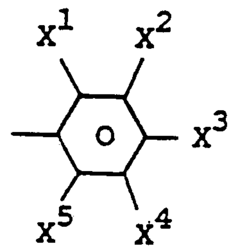

Ia Ib

dans lesquelles:

$Q^1$ représente H, un groupe alkyle ou alkoxy en $C_1$—$C_5$, F, Cl, Br ou CN,

$X^1$ à $X^5$ représentent chacun, indépendamment les uns des autres, H ou un groupe alkyle contenant jusqu'à 15 atomes de carbone et dans lequel un ou deux groupes $CH_2$ non voisins peuvent être remplacés par un groupement choisi parmi —O—, —S—, —O—CO—O—, —O—CH—NHR—, —CO—, —CO—O—, —CO—S—, —S—CO—, —SO— et —$SO_2$—,

deux au moins des symboles $X^1$ à $X^5$ ayant des significations autres que H.

3. Compositions polymeres présentant des phases à cristaux liquides, qui contiennent des groupes mésogènes liés chimiquement — éventuellement par l'intermédiaire d'un groupe de liaison — caractérisées en ce que ces groupes mésogènes répondent à la formule Ib

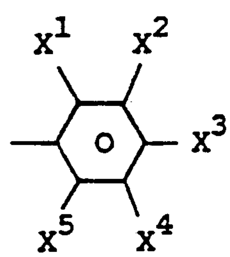

Ib

dans laquelle:

$X^1$ à $X^5$ représentent chacun, indépendamment les uns des autres, H ou un groupe alkyle contenant jusqu'à 15 atomes de carbone et dans lequel un ou deux groupes $CH_2$ non voisins peuvent être remplacés par un groupement choisi parmi —O—, —S—, —O—CO—O—, —O—CH—NHR—, —CO—, —CO—O—, —CO—S—, —S—CO—, —SO— et —$SO_2$—,

deux au moins des symboles $X^1$ à $X^5$ ayant des significations autres que H, et l'un au moins des symboles $X^1$ à $X^5$ représentant H.

4. Compositions polymères selon la revendication 3, caractérisées en ce que les symboles $X^1$, $X^3$ et $X^5$ ont les significations autres que H..

5. Procédé de préparation des compositions polymères selon la revendication 1, 2, 3 ou 4, caractérisé en ce que l'on polymérise des composés de formule II:

Y-groupe de liaison-M- (II)

dans laquelle M représente un groupe mésogène de formule Ia/b et Y un groupe fonctionnel apte à la polymérisation ou au greffage,

lorsque Y représente un groupe alcényle en $C_1$—$C_5$ qui se trouve en position oméga où (oméga-1), ou bien on les greffe sur des polymères,

lorsque Y représente un groupe hydroxy, amino, mercapto, époxyde ou carboxy.

6. Utilisation des compositions polymères selon la revendication 1, 2, 3 ou 4, en tant que substrats organiques dans l'électronique pour la technique des fibres et des feuilles.

**Revendications pour les Etats contractants: NL SE**

1. Compositions polymères présentant des phases à cristaux liquides, qui contiennent des groupes mésogènes liés chimiquement — éventuellement par l'intermédiaire d'un groupe de liaison — caractérisées en ce que ces groupes mésogènes répondent à la formule Ia et/ou Ib:

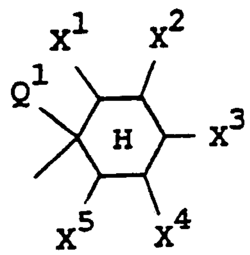
Ia

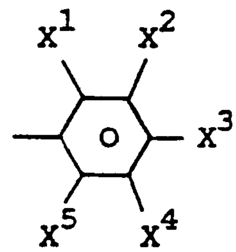
Ib

dans lesquelles:

$Q^1$ représente H, un groupe alkyle ou alcoxy en $C_1$—$C_5$, F, Cl, Br ou CN,

$X^1$ à $X^5$ représentent chacun, indépendamment les uns des autres, H ou un groupe alkyle contenant jusqu'à 15 atoms de carbone et dans lequel un ou deux groupes $CH_2$ non voisins peuvent être remplacés par un groupement choisi parmi —O—, —S—, —O—CO—O—, —O—CO—NHR—, —CO—, —CO—O—, —CO—S—, —S—CO—, —SO— et —$SO_2$—,

au moins deux des symboles $X^1$ à $X^5$ ayant des significations autres que H.

2. Procédé de préparation des compositions polymères selon la revendication 1, caractérisé en ce que l'on polymérise des composés de formule II:

Y-groupe de liaison-M (II)

dans laquelle M représente un groupe mésogène de formule Ia/b et Y un groupe fonctionnel apte à la polymérisation ou au greffage,

lorsque Y représente un groupe alcényle en $C_1$—$C_5$ qui se trouvant en position oméga ou (oméga-1), ou bien on les greffe sur des polymères,

lorsque Y représente un groupe hydroxy, amino, mercapto, époxyde ou carboxy.

3. Utilisation des compositions polymères selon la revendication 1 en tant que substrats organiques en électronique pour la technique des fibres et des feuilles.

**Claims for the Contracting States: CH DE FR GB IT LI**

1. Polymer compositions exhibiting liquid-crystalline phases and containing chemically bonded, where appropriate by means of a spacer, mesogenic groups, characterized in that these mesogenic groups correspond to the formula Ia

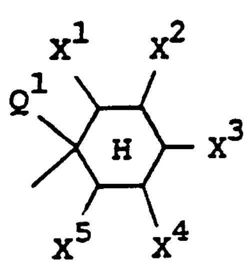
Ia

in which

$Q^1$ is H, alkyl or alkoxy having 1—5 C atomes, F, Cl, Br or CN,

$X^1$ to $X^5$ each, independently of one another, are H or an alkyl group having up to 15 C atoms, in which it is also possible for one or two non-adjacent $CH_2$ groups to be replaced by a group from the group comprising —O—, —S—, —O—CO—O—, —O—CO—NHR—, —CO—, —CO—O—, —CO—S—, —S—CO—, —SO— and —$SO_2$—,

at least two of the substituents $X^1$ to $X^5$ being different from H.

2. Polymer compositions exhibiting liquid-crystalline phases and containing chemically bonded, where appropriate by means of a spacer, mesogenic groups, characterized in that these mesogenic groups correspond to the formula Ia and Ib

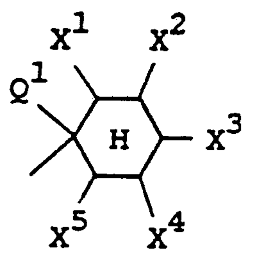

Ia

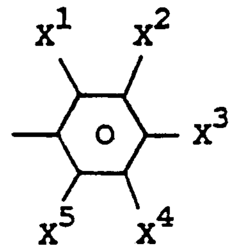

Ib

in which

$Q^1$ is H, alkyl or alkoxy having 1—5 C atomes, F, Cl, Br or CN,

$X^1$ to $X^5$ each, independently of one another, are H or an alkyl group having up to 15 C atoms, in which it is also possible for one or two non-adjacent $CH_2$ groups to be replaced by a group from the group comprising —O—, —S—, —O—CO—O—, —O—CO—NHR—, —CO—, —CO—O—, —CO—S—, —S—CO—, —SO— and —$SO_2$—,

at least two of the substituents $X^1$ to $X^5$ being different from H.

3. Polymer compositions exhibiting liquid-crystalline phases and containing chemically bonded, where appropriate by means of a spacer, mesogenic groups, characterized in that these mesogenic groups correspond to the formula Ib

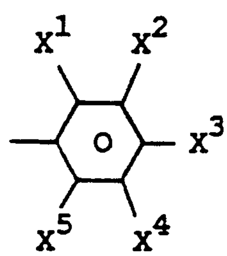

Ib

in which

$X^1$ to $X^5$ each, independently of one another, are H or an alkyl group having up to 15 C atoms, in which it is also possible for one or two non-adjacent $CH_2$ groups to be replaced by a group from the group comprising —O—, —S—, —O—CO—O—, —O—CO—NHR—, —CO—, —CO—O—, —CO—S—, —S—CO—, —SO— and —$SO_2$—,

at least two of the substituents $X^1$ to $X^5$ being different from H and at least one of the substituents $X^1$ to $X^5$ being H.

4. Polymer compositions according to Claim 3, characterized in that the substituents $X^1$, $X^3$ and $X^5$ are different from H.

5. Process for the preparation of polymer compositions according to Claim 1, 2, 3 or 4, characterized in that compounds of the formula II

Y-Spacer-M II

in which M is a mesogenic group of the formula Ia/b, and Y is a functional group which is capable of polymerization or grafting on, are,

where Y is an alkenyl group having 2 to 5 C atoms which is located in the ω- or (ω-1)-position, polymerized, or are,

where Y is a hydroxyl, amino, mercapto, epoxy or carboxyl group, grafted onto polymers.

6. Use of polymer compositions according to Claim 1, 2, 3 or 4 as organic substrates in electronics for fibre and foil techniques.

**Claims for the Contracting States: NL SE**

1. Polymer compositions exhibiting liquid-crystalline phases and containing chemically bonded, where appropriate by means of a spacer, mesogenic groups, characterized in that these mesogenic groups correspond to the formula Ia and/or Ib

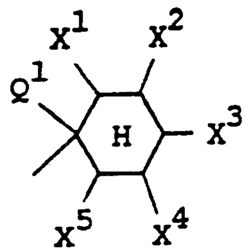

Ia

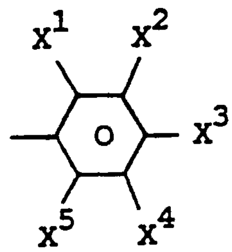

Ib

in which

$Q^1$ is H, alkyl or alkoxy having 1—5 C atomes, F, Cl, Br or CN,

$X^1$ to $X^5$ each, independently of one another, are H or an alkyl group having up to 15 C atoms, in which it is also possible for one or two non-adjacent $CH_2$ groups to be replaced by a group from the group comprising —O—, —S—, —O—CO—O—, —O—CO—NHR—, —CO—, —CO—O—, —CO—S—, —S—CO—, —SO— and —$SO_2$—,

at least two of the substituents $X^1$ to $X^5$ being different from H.

2. Process for the preparation of polymer compositions according to Claim 1, characterized in that compounds of the formula II

Y-Spacer-M    II

in which M is a mesogenic group of the formula Ia/b, and Y is a functional group which is capable of polymerization or grafting on, are,

where Y is an alkenyl group having 2 to 5 C atoms which is located in the ω- or (ω-1)-position, polymerized, or are,

where Y is a hydroxyl, amino, mercapto, epoxy or carboxyl group, grafted onto polymers.

3. Use of polymer compositions according to Claim 1, as organic substrates in electronics for fibre and foil techniques.